# EUROPEAN PATENT APPLICATION

(11) **EP 4 629 073 A1**
(43) Date of publication of application: **08.10.2025**
(21) Application number: 23925092.1
(22) Date of filing: 20.12.2023
(51) Int. Cl.: G06F 9/48

(54) **ELECTRONIC DEVICE, TASK SCHEDULING METHOD THEREFOR, AND MEDIUM**

(30) Priority: 28.02.2023 CN 202310232901
(71) Applicant: Huawei Technologies Co., Ltd., Shenzhen, Guangdong 518129 (CN)
(72) Inventor: HUANG, Xiao, Shenzhen, Guangdong 518129 (CN); HUANG, Youzhong, Shenzhen, Guangdong 518129 (CN); ZHANG, Guowei, Shenzhen, Guangdong 518129 (CN); LIN, Jiashu, Shenzhen, Guangdong 518129 (CN)
(74) Representative: Isarpatent
(86) International application number: PCT/CN2023/140350
(87) International publication number: WO 2024/179147

(57) **Abstract**

This application relates to an electronic device, a task scheduling method thereof, and a medium. The task scheduling method is applied to a processor of the electronic device. The method includes: executing a first task, to write first data including first subdata and second subdata; generating a second task during execution of the first task, where the second task includes performing a write operation on the first subdata; converting an execution association between a third task and the first task into an execution association between the third task and the second task during execution of the second task after the first task is completed, where the third task performs a read operation on the first subdata; and after the first task is completed, executing a fourth task to perform a read operation on the second subdata. In this way, in subsequent tasks that have a dependency with a parent task, a subsequent task that has no data dependency with a child task can start to be executed in time, to avoid a problem that execution time of the subsequent task is delayed because the subsequent task waits for completion of the child task.

## Description

This application claims priority to Chinese Patent Application No. 202310232901.2, filed with the China National Intellectual Property Administration on February 28, 2023 and entitled "ELECTRONIC DEVICE, TASK SCHEDULING METHOD THEREOF, AND MEDIUM", which is incorporated herein by reference in its entirety.

### TECHNICAL FIELD

This application relates to the technical field of operating systems, and in particular, to an electronic device, a task scheduling method thereof, and a medium.

### BACKGROUND

Task parallelism is used to describe a quantity of tasks executed in parallel by an operating system (which may also be referred to as a terminal system). The operating system establishes a dependency (dependency) between tasks (task) submitted or generated by an application (a user). A form of the dependency may include an indirect dependency (data dependency) established based on data of the tasks and a direct dependency (task dependency) established based on execution of the tasks. After establishing the dependency, the operating system may obtain the dependency between the tasks in a task runtime (runtime), and make a task scheduling (scheduling) decision, to implement parallelism of executed tasks and optimize resource utilization of the operating system.

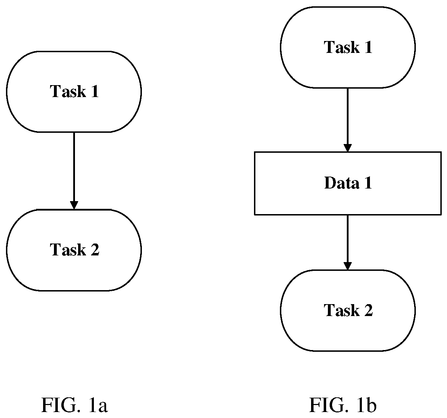

FIG. 1a and FIG. 1b respectively show processes in which the operating system schedules task execution based on the task dependency and the data dependency. As shown in FIG. 1a, when the dependency is the task dependency, execution of a task 2 depends on execution of a task 1. As shown in FIG. 1b, when the dependency is the data dependency, data 1 is written during execution of a task 1, and is read during execution of a task 2. Execution data of the task 2 depends on execution of the task 1.

However, in a nested task scenario, a new task is generated in an execution process of a task, where the new task may be referred to as a child task, and the original task is referred to as a parent task. In this scenario, if there is a data dependency between the parent task and the child task on only first data, the parent task needs to synchronize a result of the child task (that is, the parent task can be completed only after the child task is completed), so that a subsequent task that has a data dependency with the parent task on second data can start to be executed. This causes a delay in execution of the subsequent task, and affects multi-task parallelism.

### SUMMARY

This application provides an electronic device, a task scheduling method thereof, and a medium.

According to a first aspect, an embodiment of this application provides a task scheduling method, applied to a processor of an electronic device. The method includes:
executing a first task, where the first task includes performing a write operation on first data, and the first data includes first subdata and second subdata; generating a second task during execution of the first task, where the second task includes performing a write operation on the first subdata; determining that a third task includes performing a read operation on the first subdata and that an execution association has been established between the third task and the first task; converting the execution association between the third task and the first task into an execution association between the third task and the second task during execution of the second task after the first task is completed; and executing a fourth task after the first task is completed, where the fourth task performing a read operation on the second subdata.

In this embodiment of this application, the electronic device herein may be a terminal device installed with an operating system, and the processor may be an application processor, a modem processor, a graphics processing unit, an image signal processor, or the like of the terminal device. The first task, the second task, the third task, and the fourth task herein may be tasks submitted by an application to the processor through an operating system of the electronic device and are a series of instructions used to read or write data stored in a memory of the electronic device. The second task is generated during execution of the first task. The first task may be referred to as a parent task of the second task, the second task is referred to as a child task of the first task, and the first task and the second task are in a nested task relationship. The second task is generated in a process in which the first task writes the first subdata and the second subdata. A subsequent task of the first task, namely, the third task, reads only the first subdata, the fourth task (another subsequent task of the first task) reads only the second subdata, and the second task reads the first subdata. When the first task is completed before the second task, the execution association between the third task and the first task (a data dependency on the first subdata) may be converted into the execution association between the third task and the second task, and the first task may be directly exited after being completed. Because there is no execution association between the fourth task and the second task (that is, there is no data dependency on the second subdata), the fourth task may be executed in time immediately after the first task is completed.

It can be learned that, after the task scheduling method provided in this embodiment of this application is implemented, in other tasks that have a dependency with the parent task, a task that has no data dependency with the child task can start to be executed in time after the parent task is completed, to avoid a problem that execution time of the subsequent tasks is delayed because all the subsequent tasks need to wait for completion of the child task.

In a possible implementation of the first aspect, the method further includes:
executing the third task after the second task is completed.

In this embodiment of this application, there is an execution association (a data dependency) between the third task and the second task on the second subdata herein, and the third task can start to be executed only after the second task is completed.

In a possible implementation of the first aspect, determining that the third task includes performing the read operation on the first subdata and that the execution association has been established between the third task and the first task includes:
obtaining a first task list corresponding to the first subdata, and determining, based on the first task list, that the execution association has been established between the third task and the first task.

In this embodiment of this application, the first task list herein may be a data version linked list. In other words, a plurality of data versions may be generated for the first subdata, and all the data versions corresponding to the first subdata may be managed in a linked list manner. The execution association herein may include a write relationship and a read relationship. The write relationship may be that the first task needs to perform a write operation like an update operation or a delete operation on the first subdata. The read relationship herein may be that the third task needs to perform a read operation on the first subdata on which the first task completes the write operation. The third task needs to depend on an execution result of the first task.

In a possible implementation of the first aspect, converting the execution association between the third task and the first task into the execution association between the third task and the second task includes:
modifying, in the first task list, a read relationship of reading the first subdata by the third task through the first task to reading the first subdata by the third task through the second task.

In this embodiment of this application, because the second task also needs to perform a write operation like an update operation or a delete operation on the first subdata, and the third task needs to depend on an execution result of the second task, the data dependency of the third task on the first task is converted into the data dependency of the third task on the second task.

In a possible implementation of the first aspect, the first task list includes a plurality of versions of subdata corresponding to the first subdata.

In the first task list, the read relationship of reading the first subdata by the third task through the first task includes: a read relationship between the third task and a first version of subdata in the plurality of versions of subdata of the first subdata, and a write relationship between the first task and the first version of subdata.

In this embodiment of this application, the versions of subdata herein may be a plurality of data versions of the first subdata, and the first version of subdata herein corresponds to the first subdata on which the first task needs to perform the write operation. The third task needs to perform the read operation on the first subdata corresponding to the first version of subdata on which the first task completes the write operation.

In a possible implementation of the first aspect, modifying the read relationship of reading the first subdata by the third task through the first task to reading the first subdata by the third task through the second task includes:
modifying, in the first task list, the read relationship between the third task and the first version of subdata to a read relationship between the third task and a second version of subdata, where there is a write relationship between the second task and the second version of subdata.

In this embodiment of this application, the write relationship herein may be that the second task also needs to perform the write operation like the update operation or the delete operation on the first subdata. A new second version of subdata is added to the first subdata on which the second task needs to perform the write operation.

In a possible implementation of the first aspect, obtaining the first task list corresponding to the first subdata, and determining, based on the first task list, that the execution association has been established between the third task and the first task includes: The first version of subdata is located at a tail of the first task list; the first task includes a first write data list, the first write data list includes the first version of subdata, the first version of subdata includes a first data status, and the first data status indicates that the first task has not completed the write operation on the first subdata; the third task includes a third read data list, and the third read data list includes the first version of subdata; and the first version of subdata includes a first read task list, and the first read task list includes the third task.

In this embodiment of this application, the first task list, namely, a data version list, of the first subdata is obtained, and a storage form of the first task list is a linked list.

The first version of subdata of the first subdata corresponding to the first task is generated, and the first version of subdata is inserted into the tail of the first task list. The first version of subdata includes a write task list and a read task list. The read task list (namely, a consumer task list) is used to record a task of performing a read operation on the first subdata of the first version of subdata, and the write task list (namely, a next producer task) is used to record a task of performing a write operation on the first subdata of the first version of subdata. A first data version is added to a write data version list of the first task, namely, an output data version list.

In a possible implementation of the first aspect, that there is a write relationship between the second task and the second version of subdata includes: When the first task and the second task are in a nested task relationship, the second version of subdata is before the first version of subdata in the first task list.

The second task includes a second write data list, the second write data list includes the second version of subdata, and the second version of subdata includes the first data status.

In this embodiment of this application, the first task list of the first subdata is obtained; and when the first task and the second task are in the nested task relationship, the first version of subdata of the first subdata corresponding to the first task is obtained based on the write data version list of the first task. A second version of subdata of the first subdata that corresponds to the second task is generated, and the second version of subdata is inserted before the first version of subdata in the first task list. The second version of subdata also includes a write task list and a read task list. The second version of subdata is added to a write data version list of the second task, namely, an output data version list.

In a possible implementation of the first aspect, modifying, in the first task list, the read relationship between the third task and the first version of subdata to the read relationship between the third task and the second version of subdata includes: The second version of subdata includes a second read task list, and the second read task list includes the third task; the third read data list of the third task includes the second version of subdata; and the first version of subdata includes a second data status, and the second data status indicates that the first task completes the write operation on the first subdata.

In this embodiment of this application, the first version of subdata of the first subdata corresponding to the first task is obtained based on the write data version list of the first task, where the first version of subdata includes the first data status; the second version of subdata that is before the first version of subdata in the first task list is obtained; the read task list of the second version of subdata is added to the third task; and the third task in the read task list of the first version of subdata is obtained, and the first version of subdata in a read data version list of the third task is replaced with the second version of subdata. The first version of subdata is updated from the first data status to the second data status, where the second data status indicates that the first task completes the write operation on the first subdata.

In a possible implementation of the first aspect, executing the third task after the second task is completed includes: The second version of subdata includes the second data status.

In this embodiment of this application, the second version of subdata is updated from the first data status to the second data status, where the second data status indicates that the second task completes the write operation on the first subdata.

In a possible implementation of the first aspect, the method further includes:
obtaining a second task list corresponding to the second subdata, and determining, based on the second task list, that an execution association has been established between the fourth task and the first task.

In this embodiment of this application, the second task list herein may be a data version linked list. In other words, a plurality of data versions may be generated for the second subdata, and all the data versions corresponding to the second subdata may be managed in a linked list manner. The execution association herein may include a write relationship and a read relationship. The write relationship may be that the first task needs to perform a write operation like an update operation or a delete operation on the second subdata. The read relationship herein may be that the fourth task needs to perform a read operation on the second subdata on which the first task completes the write operation. The fourth task needs to depend on an execution result of the first task.

In a possible implementation of the first aspect, the second task list is in a form of a linked list.

The second task list includes a plurality of versions of subdata corresponding to the second subdata.

In the second task list, the corresponding execution association between the fourth task and the first task includes the following relationships:
a read relationship between the fourth task and a third version of subdata in the plurality of versions of subdata of the second subdata, and a write relationship between the first task and the third version of subdata.

In this embodiment of this application, the versions of subdata herein may be a plurality of data versions of the second subdata, and the third version of subdata herein corresponds to the second subdata on which the first task needs to perform the write operation. The fourth task needs to perform the read operation on the second subdata corresponding to the third version of subdata on which the first task completes the write operation.

In a possible implementation of the first aspect, the method further includes:
after the first task is completed, terminating the write relationship between the first task and the third version of subdata in the second task list.

In this embodiment of this application, after the first task writes the second subdata, the fourth task may read the second subdata.

In a possible implementation of the first aspect, in the second task list, a read relationship of reading the second subdata by the fourth task through the first task includes: The third version of subdata is located at a tail of the second task list; the first task includes a first write data list, the first write data list includes the third version of subdata, and the third version of subdata includes a first data status; the fourth task includes a fourth read data list, and the fourth read data list includes the third version of subdata; and the third version of subdata includes a third read task list, and the third read task list includes the fourth task.

In this embodiment of this application, the second task list of the second subdata is obtained, and the third version of subdata of the second subdata corresponding to the first task in the second task list is determined. The third version of subdata is located at the tail of the second subdata version list. If the third version of subdata includes the first data status, the third version of subdata is added to the read data version list of the fourth task, and the fourth task is added to the read task list of the third version of subdata.

In a possible implementation of the first aspect, that the third version of subdata includes the second data status is further included.

In this embodiment of this application, after the write operation in the first task is performed on the second subdata, the third version of subdata of the second subdata corresponding to the first task is obtained, and the third version of subdata is updated from the first data status to the second data status.

According to a second aspect, an embodiment of this application provides a readable medium. The readable medium stores instructions, and when the instructions are executed on an electronic device, the electronic device is enabled to perform the task scheduling method in the first aspect.

According to a third aspect, an embodiment of this application provides an electronic device, including:
a memory, configured to store instructions to be executed by one or more processors of the electronic device; and
a processor, which is one of the processors of the electronic device, and configured to perform the task scheduling method in the first aspect.

According to a fourth aspect, an embodiment of this application provides a computer program product, including a non-volatile computer-readable storage medium. The non-volatile computer-readable storage medium includes computer program code used to perform the task scheduling method in the first aspect.

### BRIEF DESCRIPTION OF DRAWINGS

FIG. 1a and FIG. 1b are diagrams in which an operating system schedules task execution based on a task dependency and a data dependency according to an embodiment of this application;
FIG. 2a to FIG. 2d are diagrams in which an operating system schedules task execution based on a data dependency in a nested task scenario according to an embodiment of this application;
FIG. 3a to FIG. 3c are example diagrams in which an operating system schedules task execution based on a data dependency between a subsequent task and a parent task in a nested task scenario;
FIG. 4a is a block diagram of a software structure of an operating system according to an embodiment of this application;
FIG. 4b is a software module architecture of a task scheduling module in a block diagram of a software structure of an operating system according to an embodiment of this application;
FIG. 4c is a schematic flowchart of a task scheduling method according to an embodiment of this application;
FIG. 5a and FIG. 5b are diagrams of a data dependency between tasks used as a producer or a consumer according to an embodiment of this application;
FIG. 6 is a diagram of a data version corresponding to a data dependency between tasks used as a producer or a consumer according to an embodiment of this application;
FIG. 7a to FIG. 7c are schematic flowcharts of establishing a data dependency between tasks in a task submission processing procedure according to an embodiment of this application;
FIG. 8a to FIG. 8d are diagrams of scenarios in which data dependencies are established between tasks in a task submission processing procedure according to an embodiment of this application;
FIG. 9a to FIG. 9c are schematic flowcharts of releasing a data dependency between tasks in a task completion processing procedure according to an embodiment of this application;
FIG. 10a to FIG. 10d are diagrams of scenarios in which data dependencies between tasks are released in a task completion processing procedure according to an embodiment of this application;
FIG. 11A and FIG. 11B and FIG. 12A and FIG. 12B are schematic flowcharts of establishing a data dependency between tasks in a task submission processing procedure and releasing a data dependency between tasks in a task completion processing procedure in a nested task scenario according to an embodiment of this application;
FIG. 13a to FIG. 13d are diagrams of scenarios in which an operating system establishes a data dependency between tasks based on input data and output data that correspond to the tasks in a task submission processing procedure according to an embodiment of this application;
FIG. 14a to FIG. 14d are diagrams of scenarios in which an operating system releases a data dependency between tasks based on input data and output data that correspond to the tasks in a task completion processing procedure according to an embodiment of this application;
FIG. 15 and FIG. 16A and FIG. 16B are schematic flowcharts of establishing a data dependency between tasks in a task submission processing procedure and releasing a data dependency between tasks in a task completion processing procedure in a nested task scenario according to an embodiment of this application;
FIG. 17a to FIG. 17d are diagrams of scenarios in which an operating system establishes a data dependency between tasks based on input data and output data that correspond to the tasks in a task submission processing procedure according to an embodiment of this application;
FIG. 18a to FIG. 18d are diagrams of scenarios in which an operating system releases a data dependency between tasks based on input data and output data that correspond to the tasks in a task completion processing procedure according to an embodiment of this application; and
FIG. 19 is a diagram of a structure of an electronic device according to an embodiment of this application.

### DESCRIPTION OF EMBODIMENTS

The following clearly describes technical solutions in embodiments of this application in detail with reference to the accompanying drawings.

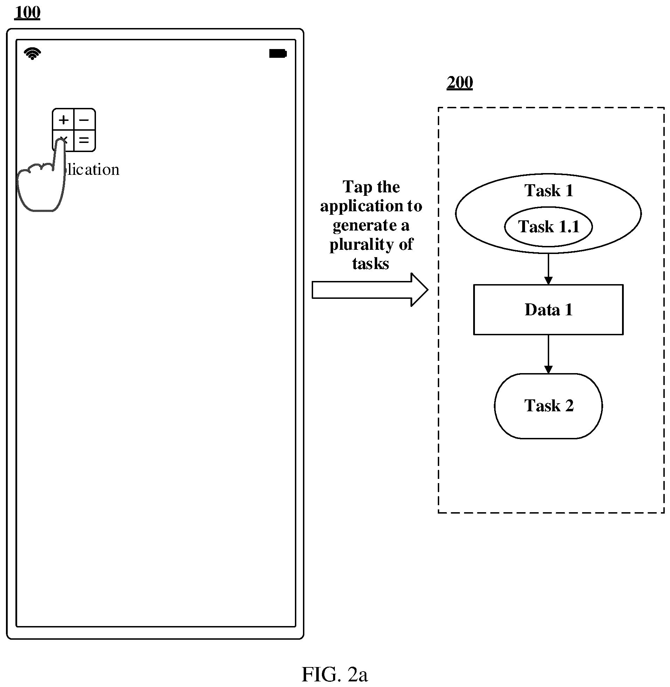

Refer to FIG. 2a to FIG. 2d. FIG. 2a to FIG. 2d are example diagrams in which an operating system schedules task execution based on a data dependency in a nested task scenario according to an embodiment of this application.

As shown in FIG. 2a, a task 1 may be a series of instructions that are generated by an application installed on an electronic device 100 and that are used to read or write data stored in a memory of the electronic device 100. The application may submit a task to a processor through an operating system of the electronic device 100, and the processor may execute instructions corresponding to the task. A task 1.1 is generated during execution of the task 1. The task 1 may be referred to as a parent task of the task 1.1, the task 1.1 is referred to as a child task of the task 1, and the task 1 and the task 1.1 are in a nested task relationship. The child task and the parent task may be executed in parallel. In a process of compiling a function run by the operating system, a nested task relationship often occurs. For example, if a recursive function is encapsulated into a task, a nested task, namely, a child task, is generated during execution of the recursive function. For another example, a complex function is encapsulated into a task, and code segments in the function may be encapsulated into a plurality of child tasks.

In the nested task scenario, the child task and the parent task may be executed in parallel. Therefore, the parent task needs to synchronize a result of the child task.

The following briefly describes several different nested task types.

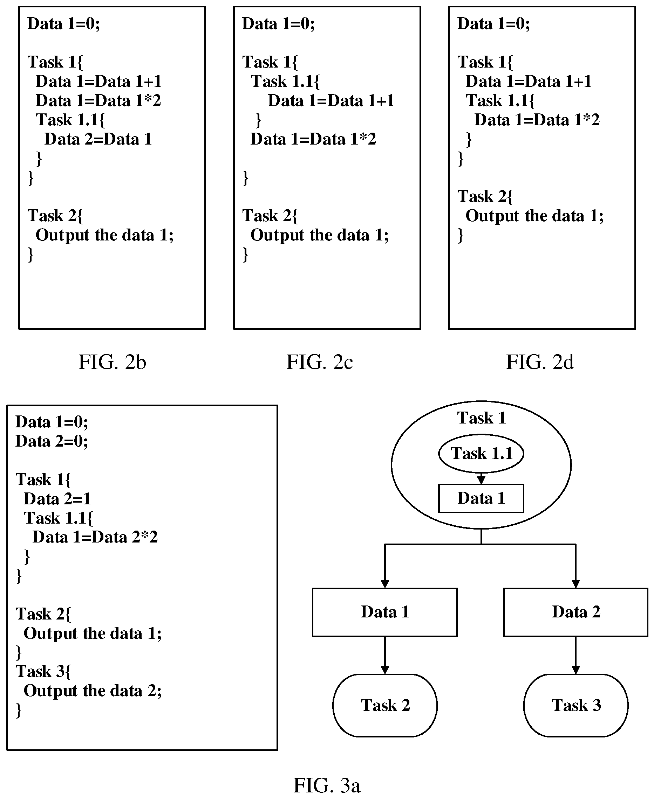

FIG. 2b shows a nested task type in which a parent task does not need to synchronize a child task. In FIG. 2b, a child task corresponding to a task 1 is a task 1.1. After the task 1 completes writing of data 1, the task 1.1 is generated, and the task 1.1 does not write the data 1, but writes only data 2. A task 2 (a subsequent task) reads only the data 1. In other words, after the task 1 is completed, the task 2 can read the correct data 1 even if the task 1.1 has not been completed. In other words, the task 1.1 does not affect task execution of the task 2.

FIG. 2c and FIG. 2d each show a nested task type in which a parent task needs to synchronize a child task. In FIG. 2c, a task 1.1 is generated during execution of a task 1, and the task 1.1 needs to write data 1. Because the task 1 needs to write the data 1 after the task 1.1 is generated, the task 1 can continue to be executed only after completion of the task 1.1 is synchronized. In other words, the task 1 needs to synchronize a result of the task 1.1. If the task 1 completes writing of the data 1 before the task 1.1 is completed, a task 2 (a subsequent task of the task 1) reads the data 1 that is being written by the task 1.1. As a result, an output result of the task 2 is incorrect. Similarly, as shown in FIG. 2d, after a task 1 completes writing of data 1, a task 1.1 is generated. The task 1 also needs to write the data 1. If the task 1 is completed, a task 2 (a subsequent task) may read the data 1 that is being written by the task 1.1. As a result, an output result of the task 2 is incorrect.

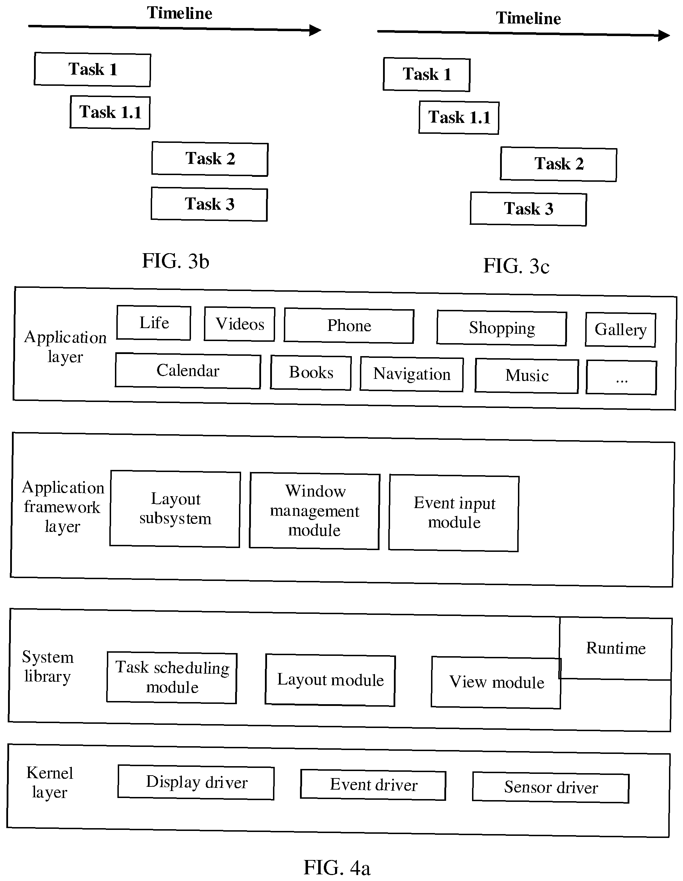

It can be learned that the scenarios shown in FIG. 2a to FIG. 2d describe only that the parent task (the task 1) has one subsequent task (the task 2). Refer to the following FIG. 3a and FIG. 3b. FIG. 3a and FIG. 3b show example scenarios in which in a nested task scenario, a parent task has a plurality of subsequent tasks, and an operating system schedules task execution based on a data dependency between the subsequent tasks and the parent task.

As shown in FIG. 3a, after a task 1 completes writing of data 2, a task 1.1 is generated. The task 1 needs to write data 1. A task 2 (a subsequent task) reads only the data 1, and a task 3 (a subsequent task) reads only the data 2. To ensure that the task 2 can read the data 1 whose writing is completed by the task 1.1, the task 1 needs to synchronize the task 1.1.

FIG. 3b is a diagram in which the operating system executes the task 1 to the task 3 in parallel. As shown in FIG. 3b, the task 1 needs to synchronize the task 1.1. In other words, the task 1 can be exited only after the task 1.1 is synchronized. After the task 1 is completed, the task 2 and the task 3 are executed in parallel. It can be learned that, for the task 3, the task 3 reads only the data 2. In other words, the task 3 depends on the data 2 and does not need to depend on the data 1. However, in the scenario shown in FIG. 3a, because the task 1 needs to synchronize the task 1.1, the task 3 can start to be executed only after the task 1.1 is completed. In other words, an operation of waiting for and synchronizing the completion of the task 1.1 by the task 1 delays execution time of the task 3.

In other words, when the parent task writes a plurality of pieces of data, if the child task writes only some of the plurality of pieces of data, and some subsequent tasks of the parent task need to read only data that is not written by the child task, the subsequent tasks need to wait until the child task is completed, and execution time of the subsequent tasks is delayed.

To resolve the problem that the execution time of the subsequent task corresponding to the parent task is delayed in the nested task scenario, embodiments of this application provide a task scheduling method. In the nested task scenario, if there is a data dependency between the parent task and the child task, that is, when written data of the child task is the same as some data (for example, first data) written by the parent task, a task that has a data dependency with the first data and that is in other subsequent tasks that have a dependency with the parent task may be detected. For example, the task is referred to as a first subsequent task. A data dependency between the parent task and the first subsequent task is converted into a data dependency between the child task and the first subsequent task, so that the parent task can be directly exited after writing is completed. In this way, in the other tasks that have the dependency with the parent task, a task that has no data dependency with the first data can start to be executed in time after the parent task is completed, to avoid the foregoing problem that the execution time of the subsequent task is delayed.

For example, for the nested task in FIG. 3a, when the task 1 is completed before the task 1.1, a data dependency between the task 2 and the task 1 may be converted into a data dependency between the task 2 and the task 1.1, and the task 1 may be directly exited after being completed. As shown in FIG. 3c, if the task 1 is completed before the task 1.1 in terms of time, and a data dependency between the task 1 and the task 2 on the data 1 is converted into a data dependency between the task 1.1 and the task 2, the task 1 may be directly exited, so that the task 3 can be executed in time. In comparison with the example in FIG. 3b in which the task 3 can be executed only after synchronization of the task 1.1 is completed, waiting time of the task 3 can be effectively reduced, and task processing efficiency of the operating system is improved.

The following describes an architecture of an operating system of an electronic device that performs the task scheduling method in embodiments of this application. FIG. 4a is a block diagram of a software structure of an operating system 200 according to an embodiment of the present invention.

In a layered architecture of the operating system 200, the operating system is divided into several layers, and each layer has a clear role and task. The layers communicate with each other through a software interface. In some embodiments, the layered architecture of the operating system may be divided into four layers: an application layer, an application framework layer, a runtime (runtime) and system library, and a kernel layer from top to bottom.

As shown in FIG. 4a, the application layer may include applications such as Life, Videos, Books, Shopping, Gallery, Calendar, Phone, Navigation, and Music.

The application framework layer may include a layout subsystem, a window management module, and the like. The layout subsystem is configured to determine a location of each display element on a screen of a terminal device. An event input module is configured to change display content on the screen of the terminal device in response to an operation performed by a user on the terminal device.

The system library may include a task scheduling module, a layout module, a view module, and the like. The task scheduling module is configured to schedule task execution based on a data dependency between tasks. The layout module and the view module may be configured to manage a running mode of a user interface in a window.

The kernel layer includes a display driver, an event driver, a sensor driver, and the like.

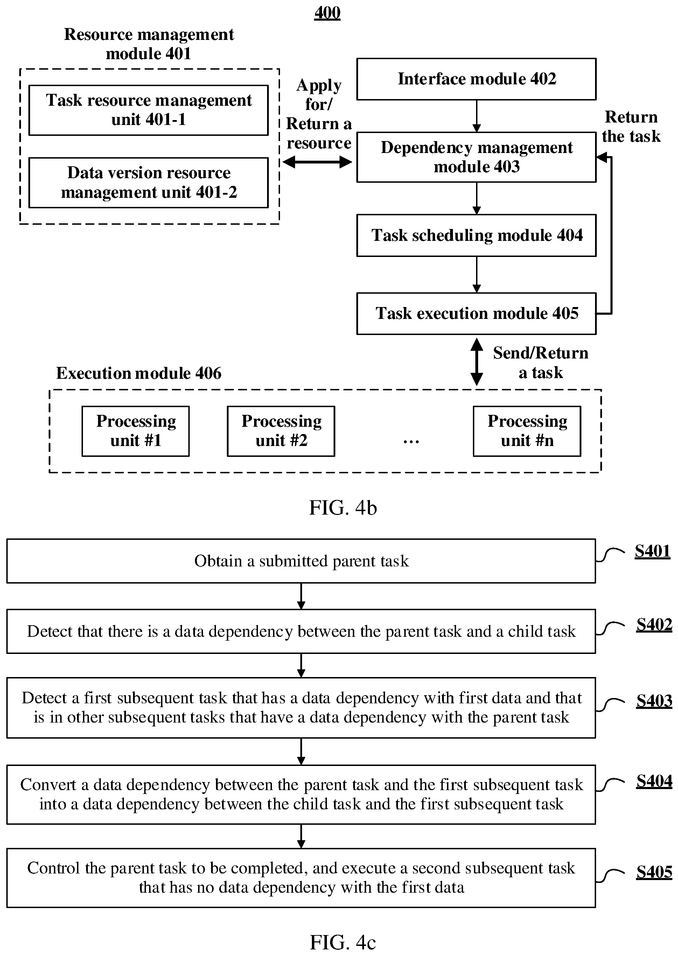

Refer to the following FIG. 4b. FIG. 4b shows an example of a software module architecture of the task scheduling module in the block diagram of the software structure of the operating system 200 in the embodiment of this application described in FIG. 4a.

As shown in FIG. 4b, the task scheduling module may be a task scheduling architecture 400, including a resource management module 401, an interface module 402, a dependency management module 403, a task scheduling module 404, a task execution module 405, and an execution module 406.

The resource management module 401 may include a task resource management unit 401-1 and a data version resource management unit 401-2, configured to manage application, recycling, and destruction of resources corresponding to a task and a data version.

The interface module 402 provides an interface for the application (the user), and supports the application in submitting various tasks through the interface.

The dependency management module 403 is configured to: receive a task submitted by an upper-layer application, apply for a resource corresponding to the task, analyze a data dependency of the task by using data read and/or written by the task, and apply for a resource corresponding to a data version to establish a corresponding data dependency. The dependency management module 403 is further configured to: when all data dependencies of a task are released, submit the task to the task scheduling module 404. After a task is completed, a data dependency between the task and a subsequent task is updated/released based on a status of a data version corresponding to the task.

The task scheduling module 404 allocates a TASK_READY task (a data dependency is released and the task can be executed) to the task execution module 405 according to a scheduling policy.

The task execution module 405 is configured to allocate a task to the specified or default execution module 406, and return the task to the dependency management module 403 after the task is completed.

The execution module 406 includes but is not limited to a multi-core processing unit like a CPU or a GPU, and supports parallel execution of a plurality of tasks.

In some embodiments, the dependency management module 403 shown in FIG. 4b may be configured to perform the task scheduling method in embodiments of this application. As shown in FIG. 4c, the task scheduling method may include the following steps.

S401: Obtain a submitted parent task.

For example, the dependency management module 403 may obtain a parent task submitted by the application through the interface module 402. For example, the parent task herein may be the task 1 in FIG. 3a.

S402: Detect that there is a data dependency between the parent task and a child task.

For example, the child task herein may be the task 1.1. The dependency management module 403 may detect that both the parent task and the child task write the data 1.

S403: Detect a first subsequent task that has a data dependency with first data and that is in other subsequent tasks that have a data dependency with the parent task.

For example, the first subsequent task of the parent task herein may be the task 2, namely, a subsequent task to be executed when the parent task has not been completed. The dependency management module 403 may obtain the task 2 submitted by the application through the interface module 402, determine that the task 2 writes the data 1, and before the task 1 generates the task 1.1, establish a data dependency between the task 1 and the task 2 on the data 1.

S404: Convert a data dependency between the parent task and the first subsequent task into a data dependency between the child task and the first subsequent task.

For example, after detecting that the task 1 submits the task 1.1, the dependency management module 403 may convert the data dependency between the task 1 and the task 2 on the data 1 into a data dependency between the task 1.1 and the task 2 on the data 1. In other words, the task 2 starts to be executed after the task 1.1 completes writing of the data 1.

S405: Control the parent task to be completed, and execute a second subsequent task that has no data dependency with the first data.

For example, the second subsequent task herein may be the task 3. The dependency management module 403 determines that there is a data dependency between the task 1 and the task 3 on the data 2. After the task 1 completes writing of the data 2, the task 3 may start to be executed without waiting for the task 1.1 to be completed.

Before the task scheduling method provided in embodiments of this application is described in detail, the following first describes in detail a task, data, a data dependency between tasks, and the like.

In some embodiments, when the task is a task of writing (for example, may include adding, modifying, or deleting) data, the task may be referred to as a producer task. When the task is a task of reading data, the task may be referred to as a consumer task.

In some embodiments, the operating system may establish/release a data dependency by defining data structures for the task and the data.

The data structure of the task is used as an example. The task may also be referred to as a task object. A data structure of a task may include the following storage information:
a task execution function, which is usually a code block encapsulated by an application that generates the task or a function submitted by an application;
a task execution status: TASK_PENDING (a data dependency is not released), TASK_READY (the data dependency is released and the task can be executed), TASK_EXECUTING (the task is being executed), and TASK_DONE (the task is completed);
an input data version list, where an input data version herein may indicate a data version corresponding to data read by the task, and after the task is completed, if the task is a last consumer of the input data version (there may be a plurality of consumer tasks for the data version), a status of the input data version is updated to a VERSION_ CONSUMED state;
an output data version list, where an output data version herein may indicate a data version corresponding to data written by the task, and after the task is completed, a status of the output data version is updated to a VERSION_PRODUCED state; and
a quantity of dependencies, including a sum of a "producer-consumer" data dependency, a "producer-next producer" data dependency, and a "consumer-next producer" data dependency that correspond to the task, where the data dependencies may be uniformly represented by a quantity of data dependencies.

In terms of the data structure of the data, the data may be referred to as a data object. A plurality of data versions may be generated for one piece of data. All the data versions corresponding to the data may be managed in a linked list manner, namely, a data version linked list. There is a sequence relationship between the data versions. The data structure of the data may include the following storage information:
an expressed data object, which is an address of the data object or a specified memory address;
a data version status, where each data version in the data version linked list may include three statuses: VERSION_PENDING (a dependency is not released), VERSION_PRODUCED (a producer task is completed), and VERSION_CONSUMED (all consumer tasks are completed);
a consumer task list, where each data version in the data version linked list may include zero, one, or a plurality of tasks that are used as consumers, and after the status of the data version is updated to the VERSION_PRODUCED state, a "producer-consumer" dependency between a producer task and a consumer task that correspond to the data version can be released;
a next producer task, where each data version in the data version linked list may include zero or one task used as a producer, and indicates a producer of a next data version instead of a producer of the current data version; after the status of the data version is updated to the VERSION_PRODUCED state, a "producer-next producer" dependency between the producer of the data version and the producer of the next data version may be released; and after the status of the data version is updated to the VERSION_CONSUMED state, a "consumer-next producer" dependency between all consumers of the data version and the producer of the next data version may be released;
a previous data version, which is a previous node in the data version linked list and a data version generated by a previous producer, and may be empty; and
a next data version, which is a next node in the data version linked list and a data version generated by a next producer, and may be empty.

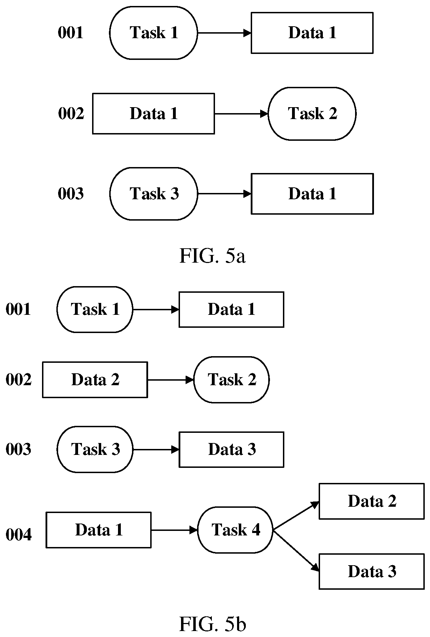

After the task and the data used to establish/release the data dependency are described, first refer to the following FIG. 5a and FIG. 5b. FIG. 5a and FIG. 5b show examples of a data dependency between tasks used as a producer or a consumer according to an embodiment of this application.

As shown in FIG. 5a, 001, 002, and 003 herein may indicate a sequence in which the application of the operating system submits a task 1, a task 2, and a task 3, instead of indicating an execution sequence of the task 1, the task 2, and the task 3. In 001, the task 1 has a write operation on data 1, and the task 1 may represent a producer of the data 1. In 002, the task 2 has a read operation on the data 1. Therefore, the task 2 may represent a consumer of the data 1. A "producer-consumer" data dependency is formed between the task 1 and the task 2. In 003, the task 3 has a write operation on the data 1. Therefore, the task 3 is also a producer of the data 1. A "consumer-next producer" data dependency is formed between the task 2 and the task 3, and a "producer-next producer" dependency is formed between the task 1 and the task 3.

It can be learned that, based on the data dependencies established between the task 1, the task 2, and the task 3, the task 1 needs to be executed first, the task 2 is executed after the "producer-consumer" data dependency between the task 1 and the task 2 is released, and after the "consumer-next producer" data dependency between the task 2 and the task 3 is released, the task 3 is finally executed.

As shown in FIG. 5b, 004 herein may indicate a sequence number of a task 4. In comparison with FIG. 5a, in 004, the task 4 is a consumer of the data 1, and is also a producer of data 2 and data 3. A "consumer-producer" dependency is formed between the task 4 and the task 1, a "consumer-next producer" dependency is formed between the task 4 and the task 2, and a "producer-next producer" dependency is formed between the task 4 and the task 3.

It can be learned that, based on the data dependencies established between the task 1, the task 2, the task 3, and the task 4, the task 4 can start to be executed only after the task 1, the task 2, and the task 3 are all completed. In other words, the task 4 can start to be executed only after the data dependencies between the task 4 and the task 1, the task 2, and the task 3 are all released. In some embodiments, one task may have a plurality of data dependencies, and the task can start to be executed only after all the data dependencies are released.

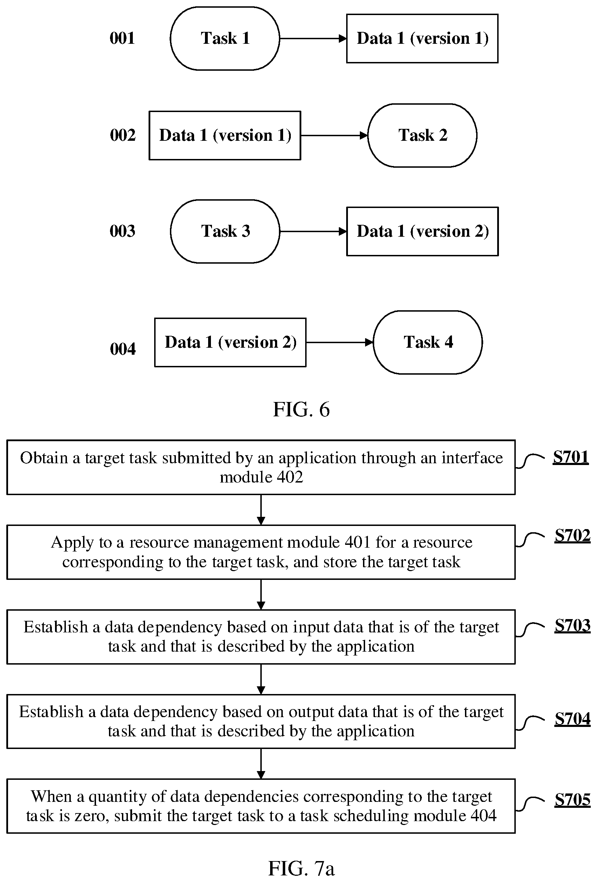

Refer to FIG. 6. FIG. 6 shows an example of a data version corresponding to a data dependency between tasks used as a producer or a consumer according to an embodiment of this application.

The data version herein may indicate a relationship between data and a task, namely, a relationship between the data and a consumer and a relationship between the data and a producer. In some embodiments, a same piece of data may be read by a plurality of tasks, or may be written by a plurality of tasks. For the same piece of data, each time a producer appears (each time the data is written), a new data version (Version) is generated for the data.

As shown in FIG. 6, 001, 002, 003, and 004 herein may indicate a sequence in which the application of the operating system submits a task 1, a task 2, a task 3, and a task 4, instead of indicating an execution sequence of the task 1, the task 2, the task 3, and the task 4. In 001, the task 1 is a producer of data 1, and may generate a version 1 of the data 1. The task 1 may represent a producer of the version 1. In 002, the task 2 is a consumer of the data 1, and the task 2 may represent a consumer of the version 1. In 003, the task 3 is a producer of the data 1, and may generate a version 2 of the data 1. The task 3 may represent a producer of the version 2, and the task 3 may also represent a next producer of the version 1. In 004, the task 4 is a consumer of the data 1, and the task 4 may represent a consumer of the version 2.

It can be learned that, based on an expression of a data version, each task used as a producer corresponds to a unique data version, and different tasks used as consumers may correspond to different data versions based on a time sequence (namely, a task running sequence). The task 1 to the task 4 in FIG. 6 relate to a non-nested task scenario. In other words, there is no parent task-child task relationship between the task 1 to the task 4.

In some embodiments, when a task used as a producer is completed, a "producer-consumer" data dependency may be released from a task that is used as a consumer and that corresponds to a first data version corresponding to the task, and a "producer-next producer" data dependency may be released from a task that is of a next data version (namely, a second data version if the next data version exists) and that is used as a producer.

In some embodiments, when all tasks that are used as consumers and that are of the first data version are completed, a "consumer-next producer" data dependency may be released from the task that is of the next data version (namely, the second data version if the next data version exists) and that is used as a producer.

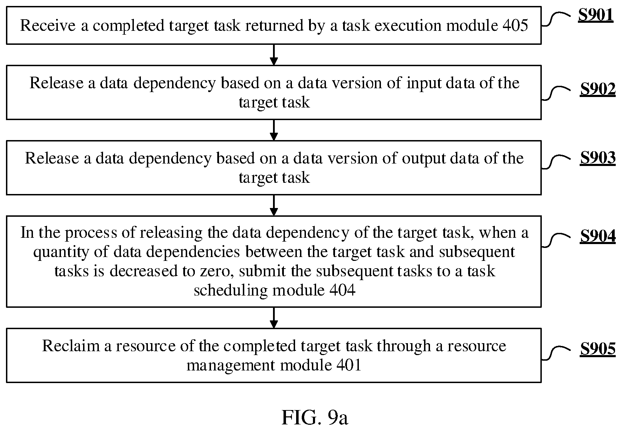

In some embodiments, the dependency management module 403 shown in FIG. 4a may be configured to adjust the data dependency between the tasks in the task scheduling method in embodiments of this application, and a procedure of processing the data dependency after task submission and a procedure of processing the data dependency after task completion may be included. With reference to FIG. 6, the following separately describes in detail, by using FIG. 7a to FIG. 7c and FIG. 9a to FIG. 9c, the task scheduling method mentioned in this application in the non-nested task scenario, where two processes of establishing a data dependency between tasks in a task submission processing procedure and releasing a data dependency between tasks in a task completion processing procedure may be included.

The task submission processing procedure shown in FIG. 7a includes the following steps.

S701: Obtain a target task submitted by an application through the interface module 402.

For example, the target task herein may be a task submitted by the application installed in the operating system. As shown in FIG. 6, the target task may be the task 1 to the task 4, namely, four tasks sequentially submitted by the application through the interface module 402.

S702: Apply to the resource management module 401 for a resource corresponding to the target task, and store the target task.

For example, the resource herein may be a storage resource of the terminal device corresponding to the operating system, for example, a memory resource. Storing the target task may be storing, in the resource corresponding to the target task, a data structure of the target task and a data structure of a data version corresponding to the task.

S703: Establish a data dependency based on input data that is of the target task and that is described by the application.

For example, if the target task reads data, the data read by the target task is used as the input data, to establish the data dependency. It may be understood that the dependency management module 403 may determine the input data of the target task by analyzing whether the target task reads the data.

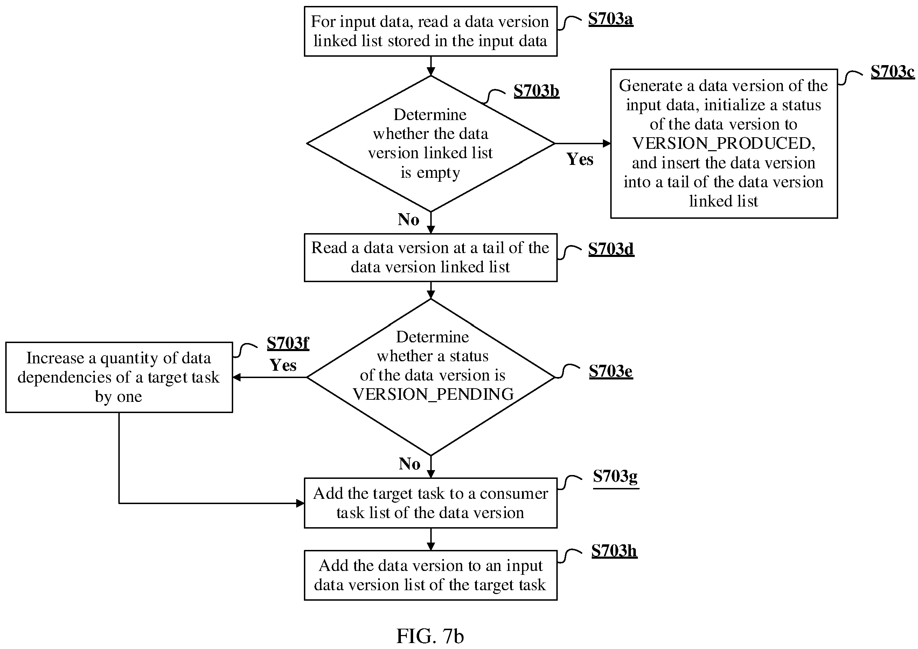

As shown in FIG. 7b, a process of establishing the data dependency for the input data may include the following steps.

S703a: For the input data, read a data version linked list stored in the input data.

For example, the data version linked list stored in the input data herein may be a data version linked list included in a data structure of a data version corresponding to the input data.

S703b: Determine whether the data version linked list is empty.

For example, determining whether the data version linked list is empty is used to determine whether another task is writing or reading or has written or read the input data. If the data version linked list is empty, it indicates that the target task is the first to read the input data, and step S703c is performed. The target task is a consumer of the input data, and may generate a data version of the input data. If the data version linked list is not empty, it indicates that the another task is writing or reading or has written or read the input data, and step S703d is performed, to obtain a data version at a tail of the data version linked list corresponding to the input data, namely, a current data version of the input data. Further, it is determined whether the another task completes writing or reading of the input data.

S703c: Generate a data version of the input data, initialize a status of the data version to VERSION_PRODUCED, and insert the data version into the tail of the data version linked list.

For example, when the target task is the first to read the input data, a latest data version of the input data is generated, and a status of the latest data version is set to VERSION_PRODUCED (a producer task is completed), to indicate that a "producer-next producer" dependency between a producer of the data version and a producer of a next data version is released. In other words, the latest data version of the input data has no corresponding producer task.

S703d: Read the data version at the tail of the data version linked list.

For example, the tail of the data version linked list herein may be a last node in the data version linked list of the input data, namely, the current data version of the input data. For the input data, the data version at the tail of the data version linked list may indicate whether there is a task, other than the target task, whose submission time is earlier than that of the target task and that writes or reads the input data.

S703e: Determine whether a status of the data version is VERSION_PENDING.

For example, if the status of the current data version of the input data is VERSION_PENDING (a dependency is not released), it indicates that before the target task, another task needs to write the input data or is writing the input data. In this case, step S703f is performed, to increase a quantity of data dependencies corresponding to the target task by one, indicating that before the target task, another task needs to write the input data, and there is a "producer-consumer" data dependency between the target task and the another task. Otherwise, step S703g is performed. The target task has a read operation on the input data, and the target task is set as a consumer task of the input data.

S703f: Increase the quantity of data dependencies of the target task by one.

For example, if the quantity of data dependencies corresponding to the target task is increased by one, it indicates that before the target task, another task needs to write the input data, and there is a data dependency between the target task and the another task.

S703g: Add the target task to a consumer task list of the data version.

For example, if the target task is set as the consumer task of the input data, it indicates that the target task has a read operation on the input data. In some embodiments, because the target task can start to read the input data only after all dependencies are released, the execution process in step S703g herein is a description of establishment of the data dependency, and does not mean that the target task can immediately read the input data.

S703h: Add the data version to an input data version list of the target task.

For example, regardless of whether the data version is read in the target task for the first time or another task has written or read the input data, the data version at the tail of the data version linked list of the input data may be added to the input data version list of the target task.

S704: Establish a data dependency based on output data that is of the target task and that is described by the application.

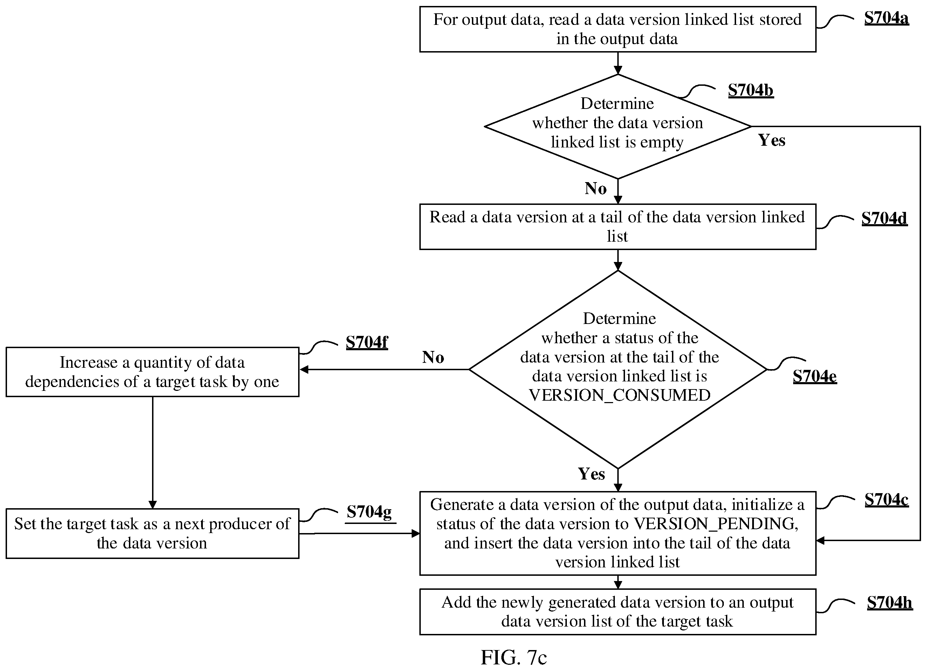

For example, if the target task writes data, the data written by the target task is used as the output data, to establish the data dependency. It may be understood that the dependency management module 403 may determine the output data of the target task by analyzing whether the target task writes data. As shown in FIG. 7c, a process of establishing the data dependency for the output data may include the following steps.

S704a: For the output data, read a data version linked list stored in the output data.

For example, the data version linked list stored in the output data herein may be a data version linked list included in a data structure of a data version corresponding to the output data.

S704b: Determine whether the data version linked list is empty.

For example, determining whether the data version linked list is empty is used to determine whether another task is writing or reading or has written or read the output data. If the data version linked list is empty, it indicates that the target task is the first to write the output data, and step S704c is performed. The target task is a producer of the output data, and may generate a data version of the output data. In some embodiments, if the data version linked list is not empty, it indicates that another task needs to write or read, is writing or reading, or has written or read the output data. In other words, there are other producer or consumer tasks before the target task, but the tasks may not be executed, are being executed, or are completed. In this case, step S704d is performed, to obtain a data version at a tail of the data version linked list corresponding to the output data, namely, a current data version of the output data. Further, it is determined whether the another task completes writing or reading of the output data.

S704c: Generate a data version of the output data, initialize a status of the data version to VERSION_PENDING, and insert the data version into the tail of the data version linked list.

For example, if the data version linked list is empty, it indicates that the target task is the first to write the output data. If the data version linked list is not empty, it indicates that there is another producer task before the target task. A latest data version of the output data is generated, and a status of the latest data version is set to VERSION_PENDING (a dependency is not released), to indicate that a "producer-consumer" data dependency between a producer of the data version and a consumer of the data version is still not released. In other words, the latest data version of the output data has a corresponding producer task. In some embodiments, an execution sequence of the target task may include: A producer task (a current task) of the current data version is higher than a consumer task of the current data version, and the consumer task of the current data version is higher than a producer task of a next data version.

S704d: Read the data version at the tail of the data version linked list.

For example, the tail of the data version linked list herein may be a last node in the data version linked list of the output data, namely, the current data version of the output data. For the output data, the data version at the tail of the data version linked list may indicate whether there is a task, other than the target task, that writes or reads the output data.

S704e: Determine whether a status of the data version at the tail of the data version linked list is VERSION_CONSUMED.

For example, if the status of the current data version of the output data is VERSION_CONSUMED (all consumer tasks are completed), it indicates that another task (excluding the target task, because the target task is a producer task and is not executed) before the target task completes reading of the output data, that is, all the consumer tasks are completed. In this case, step S704c is performed. The target task is the producer of the output data, and may generate the data version of the output data. Otherwise, step S704f is performed, to increase a quantity of data dependencies corresponding to the target task by one, indicating that before the target task, there is a producer task that needs to write the output data or a consumer task that needs to read the output data, and there is a data dependency between the target task and another task, for example, a corresponding "producer-next producer" data dependency or "consumer-next producer" data dependency.

S704f: Increase the quantity of data dependencies of the target task by one.

For example, if the quantity of data dependencies corresponding to the target task is increased by one, it indicates that there is another task that writes or reads the input data, and there is a data dependency between the target task and the another task.

S704g: Set the target task as a next producer of the data version.

For example, the target task may be a task used as a producer, and indicates a producer of the next data version instead of a producer of the current data version. Then, step S704c is performed, to generate a latest data version of the output data, and the target task is set as a producer of the latest data version of the output data, namely, the producer of the next data version of the output data.

S704h: Add the newly generated data version to an output data version list of the target task.

For example, a data version in the output data version list herein may indicate a data version corresponding to the data written by the target task. After the target task is completed, a status of the data version may be updated to a VERSION_PRODUCED state.

S705: When the quantity of data dependencies corresponding to the target task is zero, submit the target task to the task scheduling module 404.

For example, the quantity of data dependencies corresponding to the target task herein may also be represented as a quantity of dependencies of the target task, and includes a sum of a "producer-consumer" data dependency, a "producer-next producer" data dependency, and a "consumer-next producer" data dependency, where the data dependencies may be uniformly represented by the quantity of data dependencies. When the quantity of data dependencies corresponding to the target task is decreased to zero, it indicates that a status of the target task is updated to a TASK_READY status. In other words, the data dependency of the target task is released, and the target task can be executed.

With reference to FIG. 6, FIG. 7a to FIG. 7c, and FIG. 8a to FIG. 8d, the following describes in detail a detailed process in which the operating system establishes a data dependency between tasks based on input data and input data that correspond to the tasks in the task submission processing procedure.

As shown in FIG. 6, the application of the operating system sequentially submits the task 1, the task 2, the task 3, and the task 4 through the interface module 402 of the task scheduling architecture 400. The resource management module 401 sequentially allocates resources to the task 1, the task 2, the task 3, and the task 4, and the dependency management module 403 sequentially establishes data dependencies for the task 1, the task 2, the task 3, and the task 4.

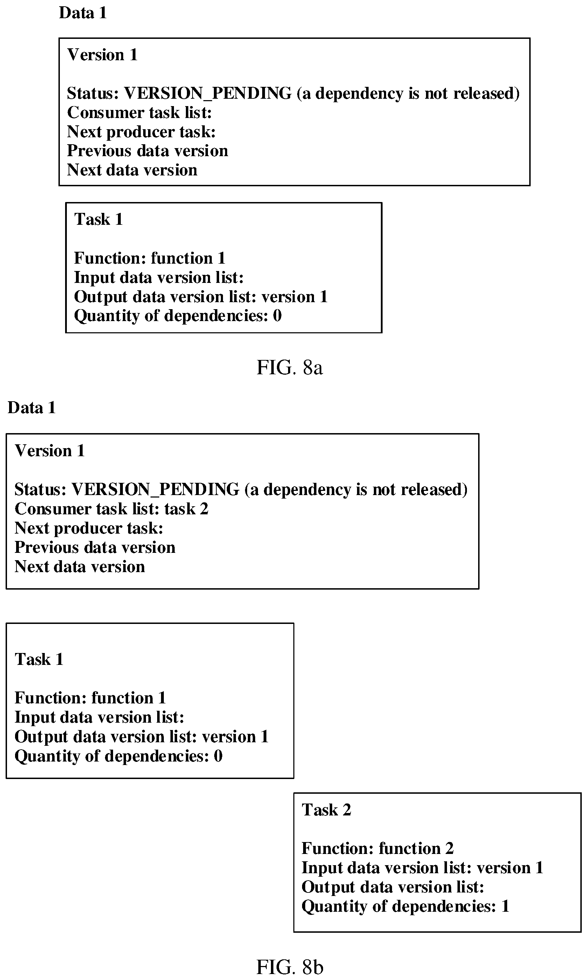

For example, the task 1 writes the data 1, and after the task 1 is submitted, a resource is first allocated to the task 1. As shown in FIG. 8a, a data structure of the task 1 may include: a function corresponding to the task 1, for example, a function 1; and an input data version list and an output data version list corresponding to the task 1, where the lists may be empty. After it is determined that the data 1 is output data of the task 1, a data version linked list of the data 1 is read. If it is determined that the data version linked list of the data 1 is empty, a version 1 of the data 1 is generated, and a status of the version 1 is initialized to VERSION_PENDING (a dependency is not released). The version 1 is inserted into a tail of the data version linked list of the data 1. In this case, the data version linked list of the data 1 includes a node of the version 1. The version 1 of the data 1 is added to the output data version list of the task 1, and a quantity of data dependencies corresponding to the task 1 is 0.

The task 2 reads the data 1. After the task 2 is submitted, a resource is first allocated to the task 2. Further refer to FIG. 8b. A data structure of the task 2 may include: a function corresponding to the task 2, for example, a function 2; and an input data version list and an output data version list corresponding to the task 2, where the lists may be empty. After it is determined that the data 1 is input data of the task 2, the data version linked list of the data 1 is read. If it is determined that the data version linked list of the data 1 is not empty, the data version, namely, the version 1, at the tail of the data version linked list of the data 1 is read. When it is determined that the status of the version 1 is VERSION_PENDING (a dependency is not released), a quantity of data dependencies of the task 2 is increased by one. In other words, a data dependency is established between the task 2 and the task 1. The task 2 is added to a consumer task list of the version 1, and the version 1 is added to the input data version list of the task 2.

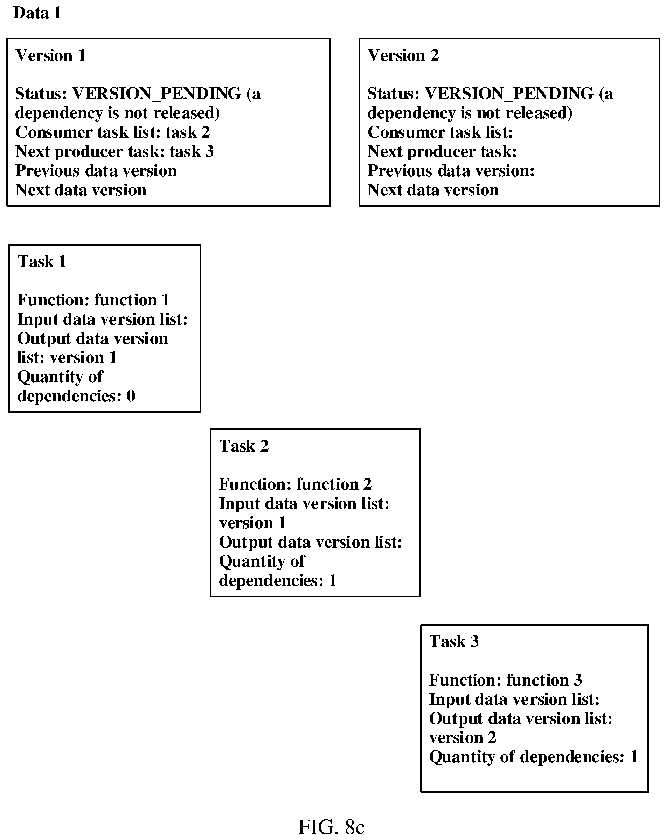

The task 3 writes the data 1, and after the task 3 is submitted, a resource is first allocated to the task 3. As shown in FIG. 8c, a data structure of the task 3 may include: a function corresponding to the task 3, for example, a function 3; and an input data version list and an output data version list corresponding to the task 3, where the lists may be empty. After it is determined that the data 1 is output data of the task 3, the data version linked list of the data 1 is read. If it is determined that the data version linked list of the data 1 is not empty, the data version, namely, the version 1, at the tail of the data version linked list of the data 1 is read. When it is determined that the status of the version 1 is not VERSION_CONSUMED (all consumer tasks are completed), a quantity of data dependencies of the task 3 is increased by one, and the task 3 is set as a next producer of the version 1, namely, a producer of a next data version of the version 1. A version 2 of the data 1 is generated as the next data version of the version 1, and the version 2 is added to the output data version list of the task 3. In addition, a status of the version 2 is initialized to VERSION_PENDING (a dependency is not released), and the version 2 is inserted into the tail of the data version linked list of the data 1.

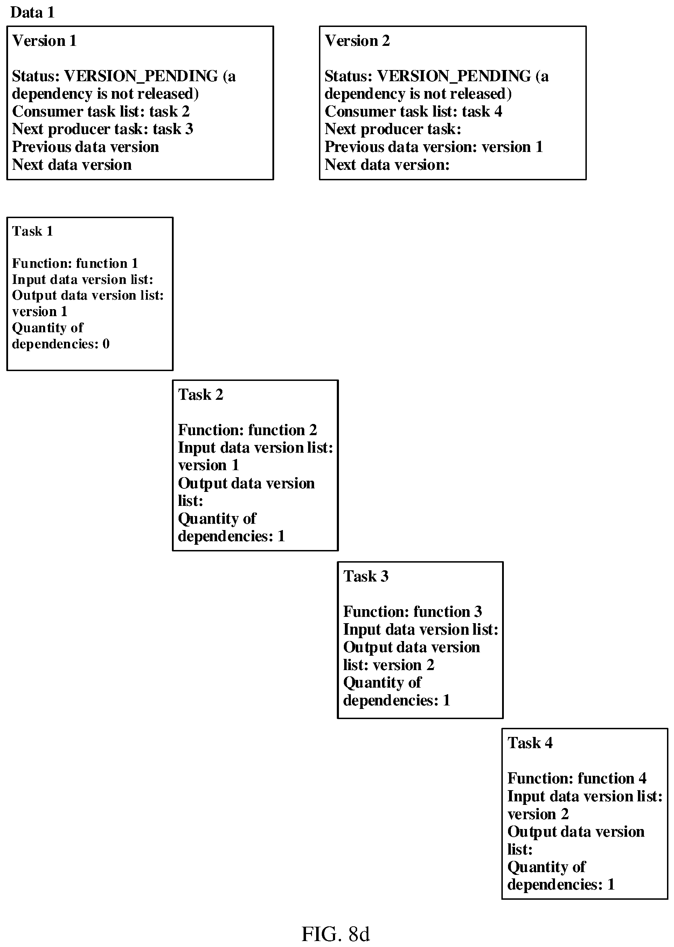

The task 4 reads the data 1. After the task 4 is submitted, a resource is first allocated to the task 4. Further refer to FIG. 8d. A data structure of the task 4 may include: a function corresponding to the task 4, for example, a function 4; and an input data version list and an output data version list corresponding to the task 2, where the lists may be empty. After it is determined that the data 1 is input data of the task 4, the data version linked list of the data 1 is read. If it is determined that the data version linked list of the data 1 is not empty, the data version, namely, the version 2, at the tail of the data version linked list of the data 1 is read. When it is determined that the status of the version 2 is VERSION_PENDING (a dependency is not released), a quantity of data dependencies of the task 4 is increased by one. In other words, a data dependency is established between the task 4 and the task 3. The task 4 is added to a consumer task list of the version 2, and the version 2 is added to the input data version list of the task 4.

After the process of establishing the data dependency between the tasks in the task submission processing procedure is described by using FIG. 7a to FIG. 7c, with reference to FIG. 6, the following describes in detail, by using FIG. 9a to FIG. 9c, a process of releasing the data dependency between the tasks in the task completion processing procedure in the non-nested task scenario.

The task completion processing procedure shown in FIG. 9a includes the following steps.

S901: Receive a completed target task returned by the task execution module 405.

For example, the target task herein may be a task whose status is updated to TASK_DONE (a task is completed). To be specific, the task scheduling module 404 allocates a task that has zero data dependencies and whose status is TASK_READY (a data dependency is released, and the task can be executed) to the task execution module 405 for execution, and the task is returned to the dependency management module 403 after the task is completed.

S902: Release a data dependency based on a data version of input data of the target task.

For example, if the target task reads data, the data read by the target task is used as the input data, and the data dependency is released based on the data version of the input data.

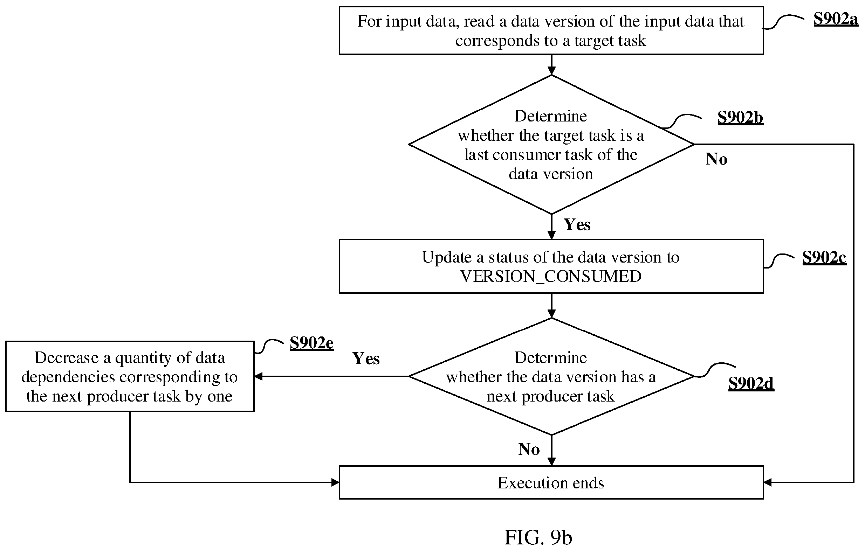

As shown in FIG. 9b, a process of releasing the data dependency on the input data may include the following steps.

S902a: For the input data, read the data version of the input data corresponding to the target task.

For example, the data version of the input data herein may be a data version generated when the target task reads the input data. The data version is stored in a data version linked list corresponding to the input data and in an input data version list corresponding to the target task.

S902b: Determine whether the target task is a last consumer task of the data version.

For example, determining whether the target task is the last consumer task of the data version herein is used to determine that there is no task, other than the target task, that reads the input data that has the data version. If the target task is not the last consumer task of the data version, step S902 ends. If the target task is the last consumer task of the data version, step S902c is performed.

S902c: Update a status of the data version to VERSION_CONSUMED.

For example, the status of the target task is TASK_DONE (the task is completed), that is, the target task is completed, and the target task completes reading of the input data. In this case, the status of the data version of the input data may be updated to VERSION_CONSUMED (all consumer tasks are completed).

S902d: Determine whether the data version has a next producer task.

For example, determining whether the data version has a next producer task herein is used to determine whether there is a next task to write the input data corresponding to the data version. If the data version has a next producer task, step S902e is performed, to decrease, by one, a quantity of data dependencies of a task that writes the input data corresponding to the data version. In other words, a "consumer-next producer" data dependency between all consumers and a producer of a next data version is decreased from the quantity of data dependencies of the task.

S902e: Decrease a quantity of data dependencies corresponding to the next producer task by one.

For example, the "consumer-next producer" data dependency between all the consumers and the producer of the next data version is released from the quantity of data dependencies of the producer task corresponding to the next data version of the data version.

S903: Release a data dependency based on a data version of output data of the target task.

For example, if the target task writes data, the data written by the target task is used as the output data, and the data dependency is released based on the data version of the output data.

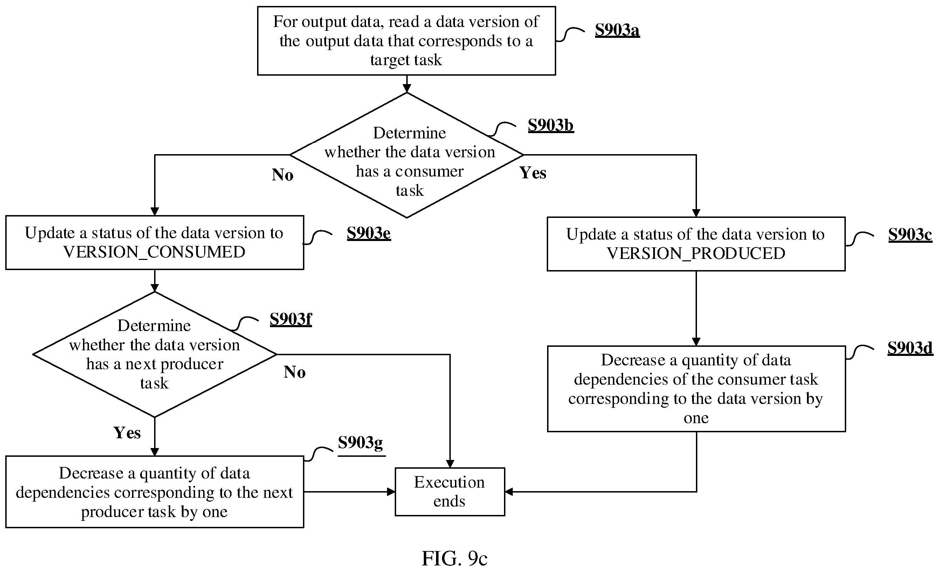

As shown in FIG. 9c, a process of releasing the data dependency on the output data may include the following steps.

S903a: For the output data, read the data version of the output data corresponding to the target task.

For example, the data version of the output data herein may be a data version generated when the target task writes the output data. The data version is stored in a data version linked list corresponding to the output data and in an output data version list corresponding to the target task.

S903b: Determine whether the data version has a consumer task.

For example, determining whether the data version has a consumer task herein is used to determine whether there is another task that reads the output data that has the data version. If the data version has a consumer task, step S903c is performed, to update a status of the data version to VERSION_PRODUCED. If no, step S902 ends. If the data version has a consumer task, step S903e is performed, to update a status of the data version to VERSION_PRODUCED.

S903c: Update the status of the data version to VERSION_PRODUCED.

For example, the status of the target task is TASK_DONE (the task is completed), that is, the target task is completed, and the target task completes writing of the output data. In this case, the status of the data version of the output data may be updated to VERSION_PRODUCED (a producer task is completed).

S903d: Decrease a quantity of data dependencies of the consumer task corresponding to the data version by one.

For example, because the target task completes writing of the output data, even if there are a plurality of subsequent tasks that need to read the output data after the target task, accuracy of the subsequent tasks is not affected. Then, the execution ends.

S903e: Update a status of the data version to VERSION_CONSUMED.

For example, if the data version has no consumer task, the status of the data version is updated to VERSION_ CONSUMED (all consumer tasks are completed).

S903f: Determine whether the data version has a next producer task.

For example, determining whether the data version has a next producer task herein is used to determine whether there is a producer task that writes output data corresponding to a next data version. If the data version has a next producer task, step S903g is performed, to decrease, by one, a quantity of data dependencies of the task that writes the output data corresponding to the next data version, that is, release a "producer-next producer" dependency between the target task of the data version and the subsequent task of the next data version. Otherwise, the execution ends.

S903g: Decrease a quantity of data dependencies corresponding to the next producer task by one.

For example, the next data version of the output data corresponds to only one producer task. In other words, only one producer task can write one data version of the output data, and the operation of decreasing the quantity of data dependencies corresponding to the next producer task by one is to release a "consumer-next producer" dependency or a "producer-next producer" dependency of the next producer. Then, the execution ends.

S904: In the process of releasing the data dependency of the target task, when a quantity of data dependencies between the target task and subsequent tasks is decreased to zero, submit the subsequent tasks to the task scheduling module 404.

For example, the quantity of data dependencies corresponding to the target task herein may also be represented as a quantity of dependencies of the target task, and includes a sum of a "producer-consumer" data dependency, a "producer-next producer" data dependency, and a "consumer-next producer" data dependency, where the data dependencies may be uniformly represented by the quantity of dependencies. When the quantity of dependencies corresponding to the target task is decreased to zero, and the status of the target task is updated to TASK_DONE (the task is completed), it indicates that the data dependency between the target task and the subsequent task is released, and the task scheduling module 404 may execute the subsequent task.

S905: Reclaim a resource of the completed target task through the resource management module 401.

For example, the resource management module 401 may reclaim the resource of the target task whose status is TASK_DONE (the task is completed), that is, reclaim a data structure of the target task.

With reference to FIG. 6, FIG. 9a to FIG. 9c, and FIG. 10a to FIG. 10d, the following describes a detailed process in which the operating system releases a data dependency between tasks based on input data and input data that correspond to the tasks in the task completion processing procedure.

As shown in FIG. 6, the application of the operating system sequentially submits the task 1, the task 2, the task 3, and the task 4 through the interface module 402 of the task scheduling architecture 400. The resource management module 401 sequentially allocates resources to the task 1, the task 2, the task 3, and the task 4, the dependency management module 403 sequentially establishes data dependencies for the task 1, the task 2, the task 3, and the task 4, and the task scheduling module 404 schedules execution of the task 1, the task 2, the task 3, and the task 4.

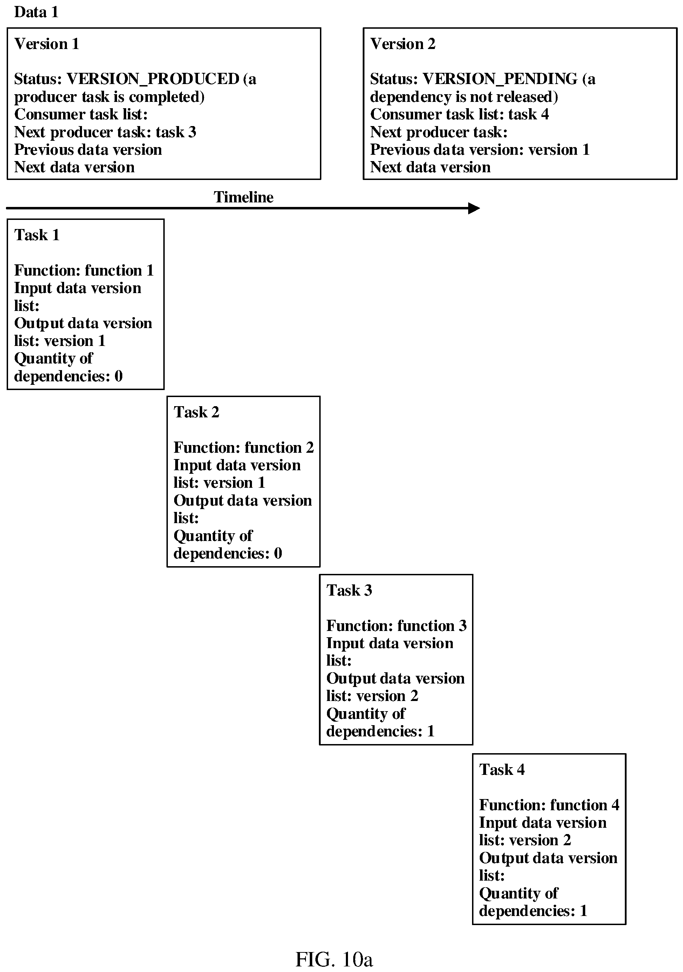

For example, the task 1 writes the data 1. After the task 1 is completed, as shown in FIG. 10a, a data version linked list of the data 1 is read, and the data version linked list includes a version 1 and a version 2. An output data version list corresponding to the task 1 is read to obtain the version 1. The version 1 has a consumer task, namely, the task 2. A status of the version 1 is updated to VERSION_PRODUCED (a producer task is completed). A quantity of data dependencies of the consumer task corresponding to the version 1 is decreased by one. In other words, dependencies of all consumer tasks that read the version 1 of the data 1 are released. Herein, a "producer-consumer" dependency between the task 1 and the task 2 corresponding to the version 1 may be released.

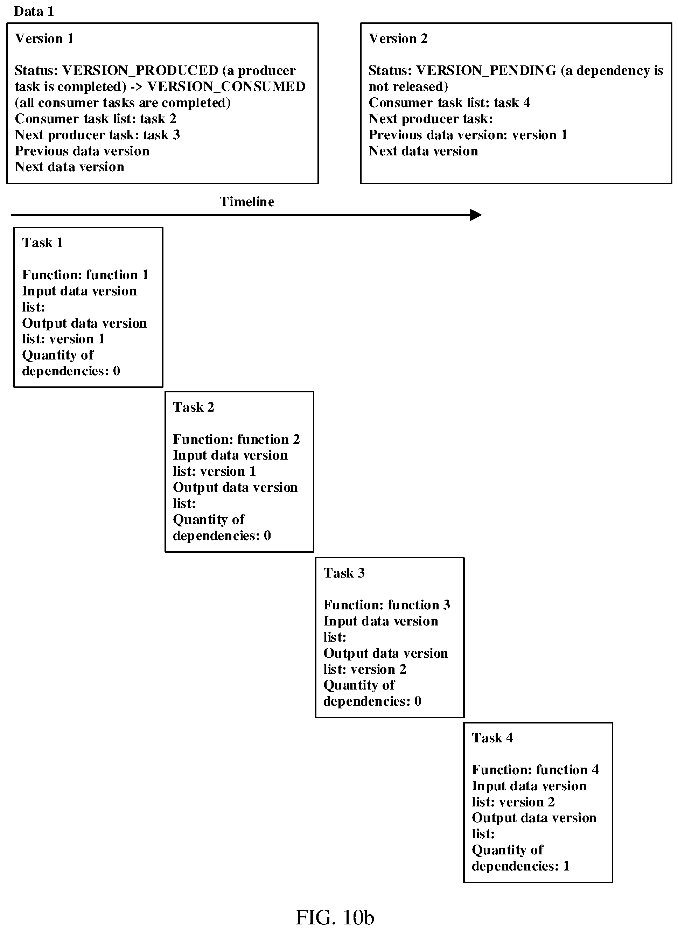

The task 2 reads the data 1. After the task 2 is completed, further refer to FIG. 10b. An input data version list corresponding to the task 2 is read to obtain the version 1. If a last consumer task of the version 1 is a task, the status of the version 1 is updated to VERSION_CONSUMED (all consumer tasks are completed). A next producer task of the version 1 is the task 3, and a quantity of data dependencies of the task 3 is decreased by one.

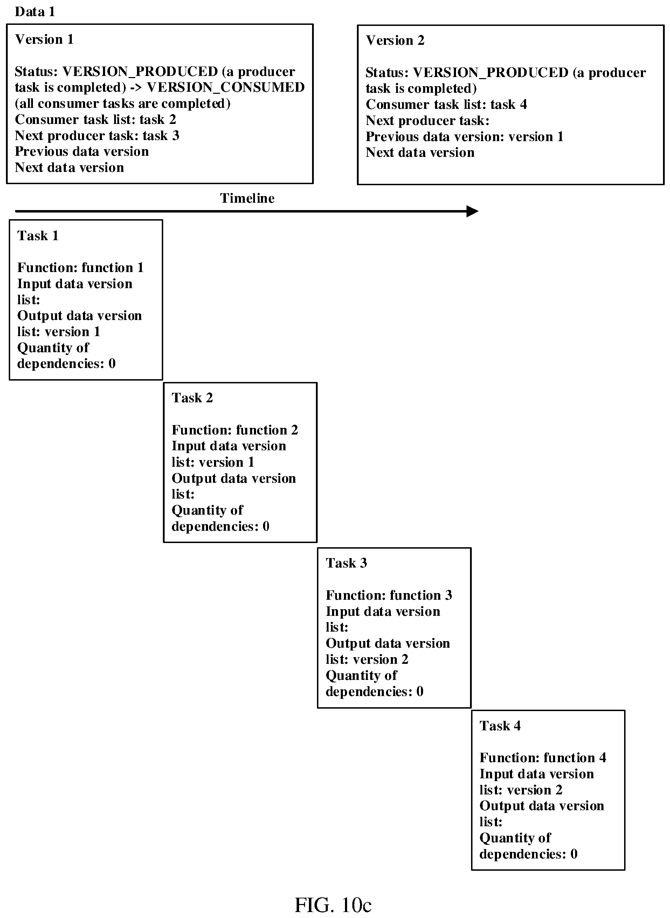

The task 3 the task 1 write the data 1. After the task 3 is completed, as shown in FIG. 10c, an output data version list corresponding to the task 3 is read to obtain the version 2. The version 2 has a consumer task, namely, the task 4. A status of the version 2 is updated to VERSION_PRODUCED (a producer task is completed). A quantity of data dependencies of the consumer task corresponding to the version 2 is decreased by one. In other words, a "producer-consumer" dependency between the task 3 and the task 4 corresponding to the version 2 is released.

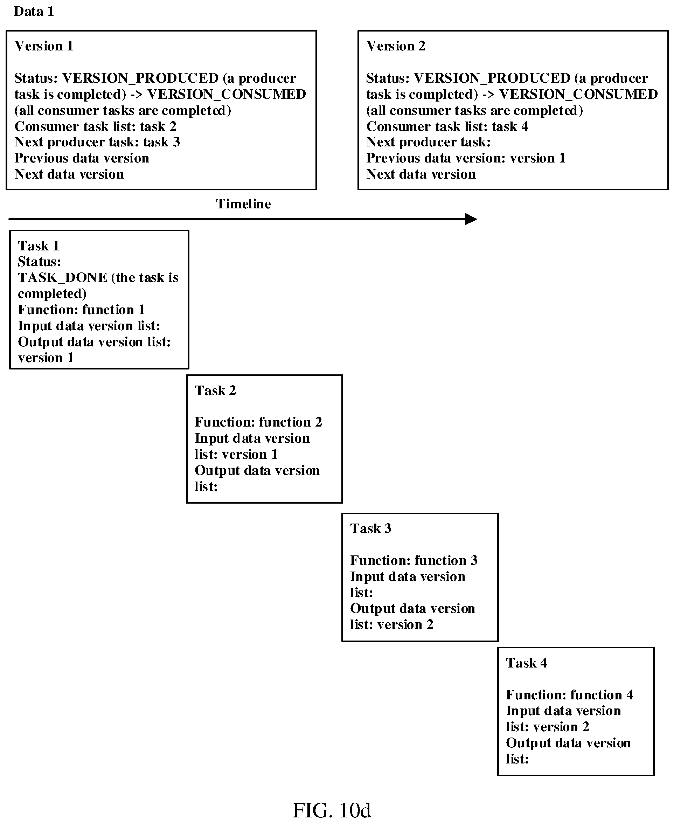

The task 4 reads the data 1. After the task 4 is completed, further refer to FIG. 10d. An input data version list corresponding to the task 2 is read to obtain the version 1. If a last consumer task of the version 1 is a task, the status of the version 1 is updated to VERSION_CONSUMED (all consumer tasks are completed).

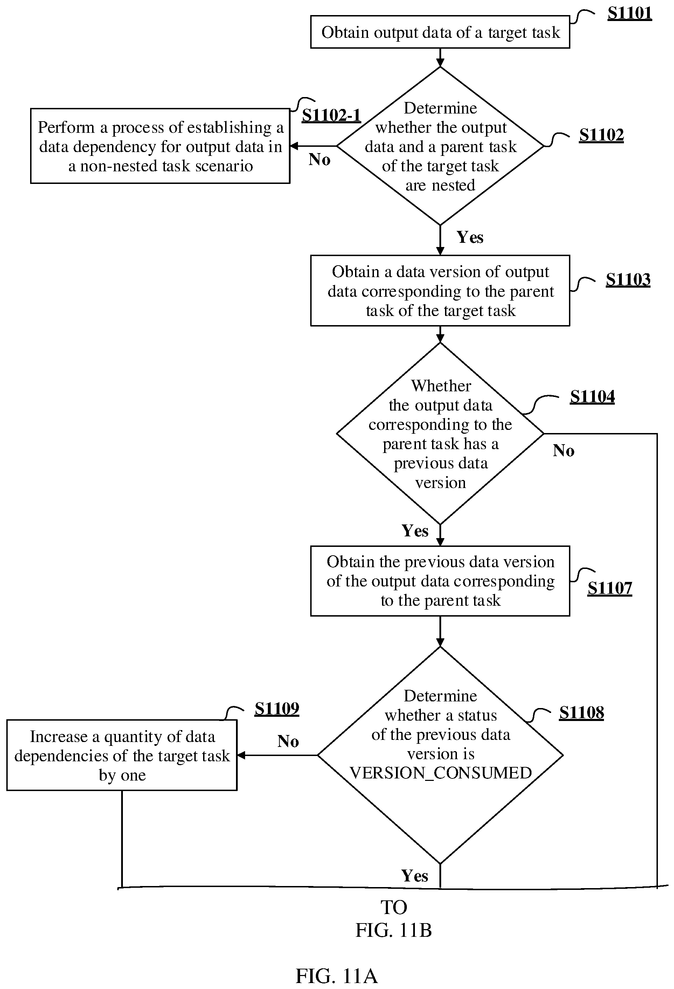

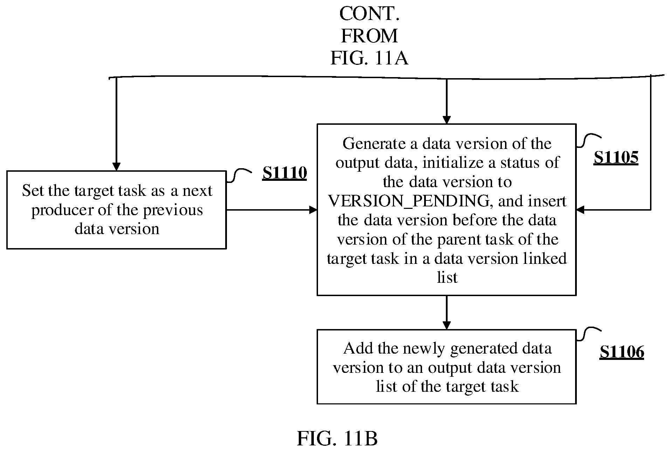

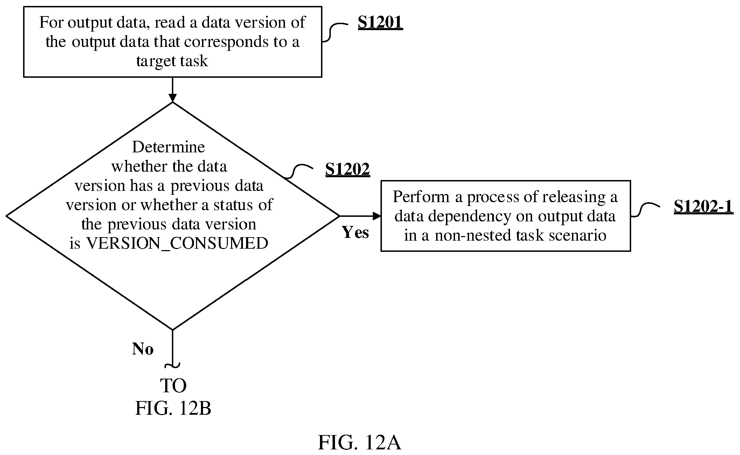

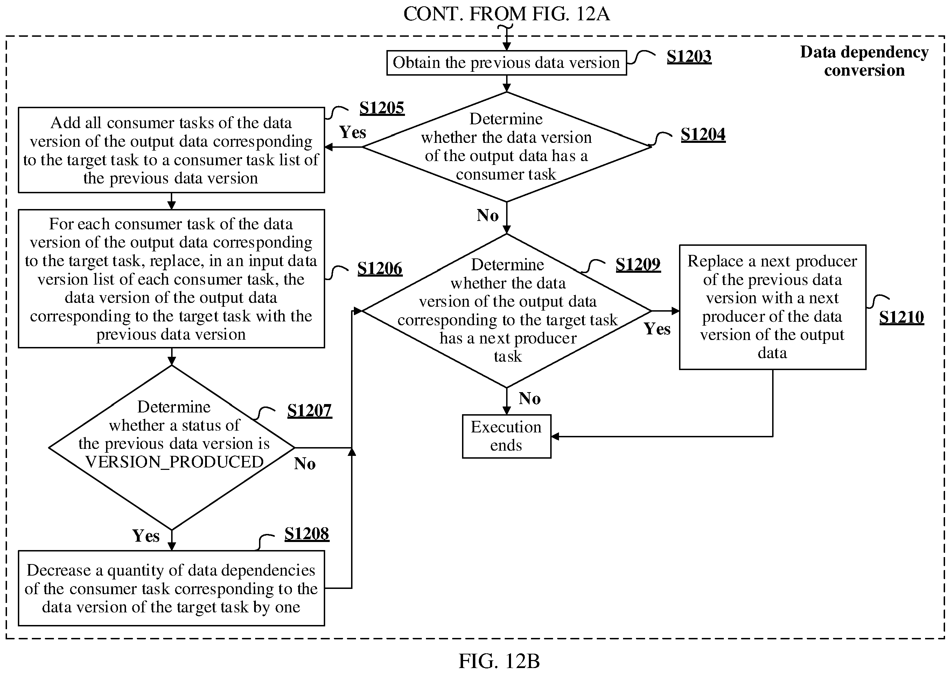

With reference to FIG. 6, FIG. 7a to FIG. 7c, and FIG. 9a to FIG. 9c, the processes of establishing the data dependency between the tasks in the task submission processing procedure and releasing the data dependency between the tasks in the task completion processing procedure in the non-nested task scenario are described in detail. The following describes in detail, by using FIG. 11A and FIG. 11B and FIG. 12A and FIG. 12B, processes of establishing a data dependency between tasks in a task submission processing procedure and releasing a data dependency between tasks in a task completion processing procedure in a nested task scenario.

As shown in FIG. 11A and FIG. 11B, in the nested task scenario, in the task submission processing procedure, a process of establishing a data dependency for output data may include the following steps.

S1101: Obtain output data of a target task.

For example, if the target task writes data, the data written by the target task is used as output data (data_i), to establish a data dependency. It may be understood that the target task herein may be a child task.

S1102: Determine whether the output data and a parent task of the target task are nested.

For example, if the output data (data_i) of the target task also exists in a data dependency of the parent task that has been processed by the dependency management module 403, it is determined that the output data and the parent task of the target task are nested. In other words, the target task and the parent task are in a nested task scenario. In this case, step S1103 is performed. Otherwise, step S1102-1 may be performed, that is, the process of establishing the data dependency for the output data in the non-tested task scenario, namely, the process of establishing the data dependency for the output data shown in FIG. 7c is performed.

S1103: Obtain a data version of output data corresponding to the parent task of the target task.

For example, the parent task of the target task also writes the output data (data_i), and an output data version list of the parent task stores a data version (version_k) of the output data (data_i). It may be understood that the data version (version_k) herein may also be stored in a data version linked list corresponding to the output data (data_i).

S1104: Whether the output data corresponding to the parent task has a previous data version.

For example, whether there is a previous data version herein may be whether the data version (version_k) has a previous data version (version_k-1) in the data version linked list corresponding to the output data (data_i). If there is no previous data version, step S1105 is performed, indicating that only the parent task of the target task writes the output data (data_i). If there is a previous data version, step S1107 is performed, indicating that in addition to the parent task of the target task, there is another task that writes the output data (data_i).

S1105: Generate a data version of the output data, initialize a status of the data version to VERSION_PENDING, and insert the data version before the data version of the parent task of the target task in the data version linked list.

For example, before the target task writes the output data, the parent task of the target task also writes the output data, to generate a latest data version (version_k+1) of the output data, a status of the latest data version is set to VERSION_PENDING (a dependency is not released), and the latest data version is inserted before the data version of the parent task, and is referred to as a previous data version of the data version of the parent task.

S1106: Add the newly generated data version to an output data version list of the target task.

For example, the data version in the output data version list herein may indicate the data version (version_k+1) corresponding to the data written by the target task.

S1107: Obtain the previous data version of the output data corresponding to the parent task.

For example, the previous data version (version_k-1) herein may be a data version before the data version (version_k) of the parent task in the data version linked list corresponding to the output data (data_i), namely, the previous data version of the data version (version_k).

S1108: Determine whether a status of the previous data version is VERSION_CONSUMED.

For example, if the status of the previous data version (version_k-1) is VERSION_CONSUMED (all consumer tasks are completed), it indicates that another task before the target task completes reading of the output data. In this case, step S1105 is performed. Otherwise, step S1109 is performed, to increase a quantity of data dependencies corresponding to the target task by one, indicating that there is another task that writes the output data, and there is a data dependency between the target task and the another task.

S1109: Increase the quantity of data dependencies of the target task by one.

For example, if the quantity of data dependencies corresponding to the target task is increased by one, it indicates that there is another task that writes or reads the input data, and there is a data dependency between the target task and the another task.

S1110: Set the target task as a next producer of the previous data version.

For example, the target task may be a task used as a producer, and indicates a producer of a next data version of the previous data version. Then, step S1105 is performed, to generate a latest data version of the output data, and the target task is set as a producer after the original previous data version (version_k-1) of the data version (version_k) of the parent task.

As shown in FIG. 12A and FIG. 12B, in the nested task scenario, in the task completion processing procedure, a process of releasing a data dependency on output data may include the following steps.

As shown in FIG. 12A and FIG. 12B, the process of releasing the data dependency on the output data may include the following steps.

S1201: For the output data, read a data version of the output data that corresponds to a target task.

For example, a data version (version_i) of the output data herein may be a data version generated when the target task writes the output data. The data version is stored in a data version linked list corresponding to the output data and in an output data version list corresponding to the target task.

S1202: Determine whether the data version has a previous data version or whether a status of the previous data version is VERSION_CONSUMED.

For example, the previous data version herein may be a previous data version (version_k) of the data version (version_i) of the output data in the linked list. In other words, the status of the previous data version (version_k) is not VERSION_CONSUMED (all consumer tasks are completed) only when a child task writes or reads the output data of the target task (a parent task) in a nested manner and the target task is completed but execution of the child task has not been completed. In this case, step S1203 is performed, and data dependency conversion needs to be performed between the target task (the parent task) and the child task. Otherwise, step S1202-1 is performed, that is, the process of releasing the data dependency on the output data shown in FIG. 9c is performed.

S1203: Obtain the previous data version.

For example, the previous data version herein may be the data version (version_k) before the data version (version_i) of the output data.

S1204: Determine whether the data version of the output data has a consumer task.

For example, if the data version (version_i) of the output data of the target task has a consumer task, step S1205 is performed, to add the consumer of the target task to a consumer task list of the child task. Otherwise, step S1209 is performed, to determine whether the data version of the output data has a next producer task.

S1205: Add all consumer tasks of the data version of the output data corresponding to the target task to a consumer task list of the previous data version.

For example, the consumer of the target task (the parent task) is added to the consumer task list of the child task.

S1206: For each consumer task of the data version of the output data corresponding to the target task, replace, in an input data version list of each consumer task, the data version of the output data corresponding to the target task with the previous data version.

For example, the consumer task of the target task (the parent task) needs to be converted to the child task herein. In all input data version lists of the target task (the parent task), the data version (version_i) of the output data corresponding to the target task further needs to be replaced with the previous data version (version_k).

S1207: Determine whether a status of the previous data version is VERSION_PRODUCED.

For example, if the status of the previous data version (version_k), namely, a data version of the child task, is VERSION_PRODUCED (a producer task is completed), it indicates that a status of the child task is TASK_DONE (the task is completed). In other words, the child task is completed. In this case, step S1208 is performed, to release a data dependency of a subsequent task of the child task.

S1208: Decrease a quantity of data dependencies of the consumer task corresponding to the data version of the target task by one.

For example, because the child task of the target task (the parent task) also completes writing of the output data, even if there are a plurality of subsequent tasks that need to read the output data after the target task, accuracy of the subsequent tasks is not affected.

S1209: Determine whether the data version of the output data corresponding to the target task has a next producer task.

For example, determining whether the data version (version_i) of the output data corresponding to the target task has a next producer task is used to determine whether there is a producer task that writes output data corresponding to a next data version of the data version (version_i). If there is a next producer task, step S1210 is performed, to replace a next producer of the previous data version (version_k) with a next producer of the data version (version_i) of the output data. In other words, a next producer of the completed target task (the parent task) is converted to the child task that is of the target task and that has not been completed.

S1210: Replace the next producer of the previous data version with the next producer of the data version of the output data.

For example, the next producer of the completed target task (the parent task) is converted to the child task that is of the target task and that has not been completed.

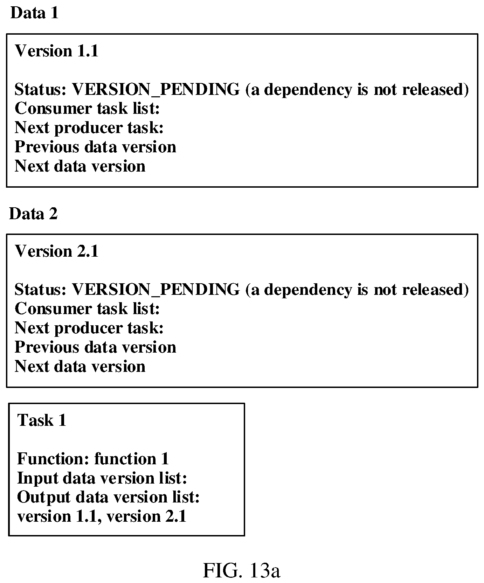

With reference to FIG. 11A and FIG. 11B and FIG. 13a to FIG. 13d, the following first describes a detailed process in which the operating system establishes a data dependency between tasks based on input data and output data that correspond to the tasks in the task submission processing procedure.

For example, a task 1 writes data 1 and data 2. After the task 1 is submitted, as shown in FIG. 13a, a data structure of the task 1 may include: a function corresponding to the task 1, for example, a function 1; an input data version list corresponding to the task 1, which may be empty; and an output data version list including a version 1.1 and a version 2.1. The version 1.1 and the version 2.1 are in a VERSION_PENDING status.

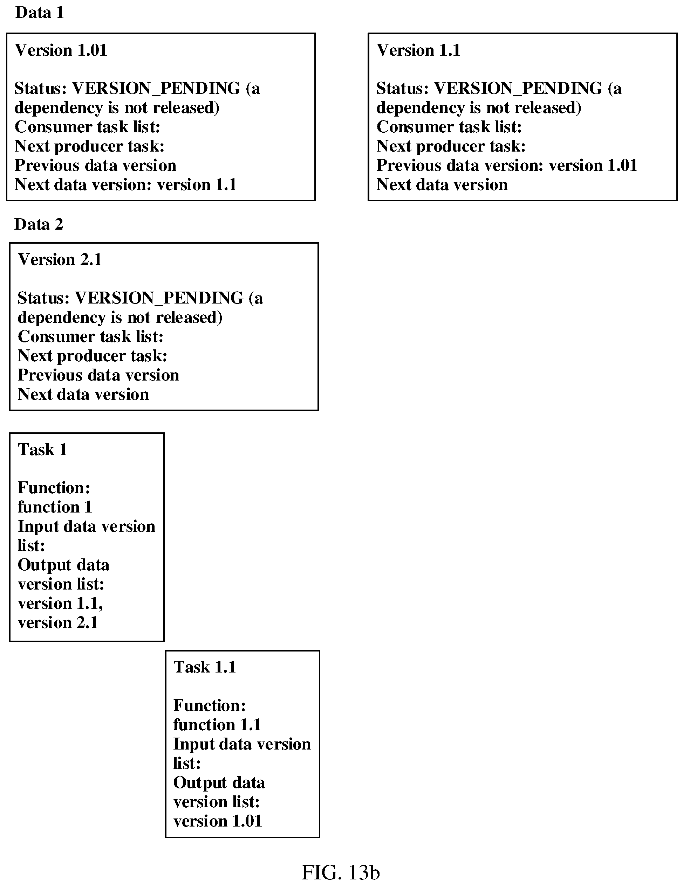

The task 1 submits a task 1.1 in an execution process, and the task 1.1 writes the data 1. Further refer to FIG. 13b. A function corresponding to the task 1.1 is, for example, a function 1.1; an input data version list corresponding to the task 1.1 may be empty; and an output data version list may include a version 1.01. For the data 1, the version 1.01 is earlier than the version 1.1, and a status of the version 1.01 is VERSION_PENDING (a dependency is not released).

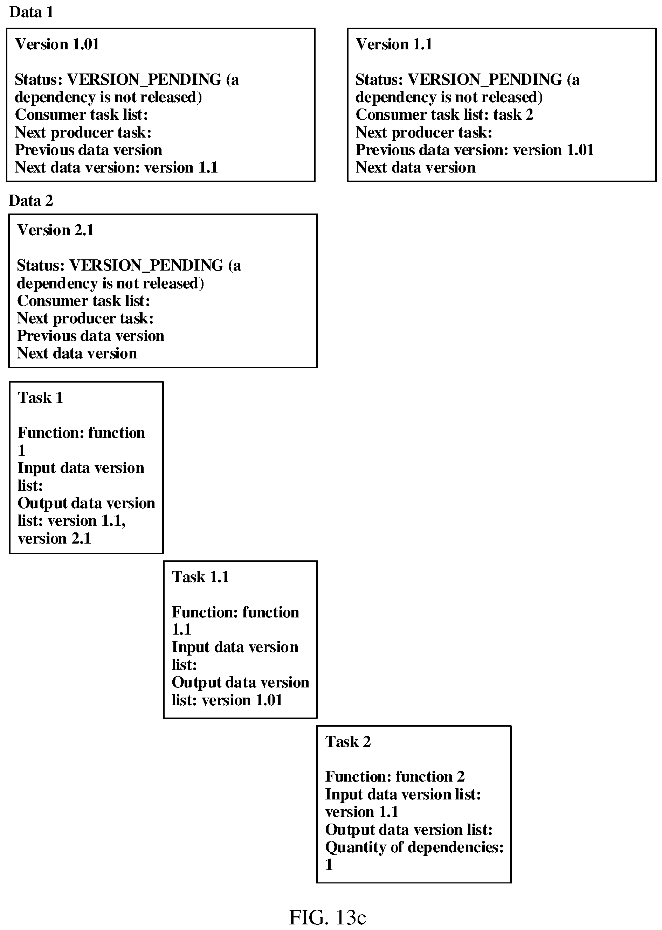

A task 2 reads the data 1. After the task 2 is submitted, as shown in FIG. 13c, a data structure of the task 2 may include a function corresponding to the task 2, for example, a function 4. After it is determined that the data 1 is input data of the task 2, a data version linked list of the data 1 is read. If it is determined that the data version linked list of the data 1 is not empty, a data version, namely, the version 1.1, at a tail of the data version linked list of the data 1 is read. When it is determined that the status of the version 1.1 is VERSION_PENDING (a dependency is not released), a quantity of data dependencies of the task 2 is increased by one, the task 2 is added to a consumer task list of the version 1.1, and the version 1.1 is added to an input data version list of the task 2.

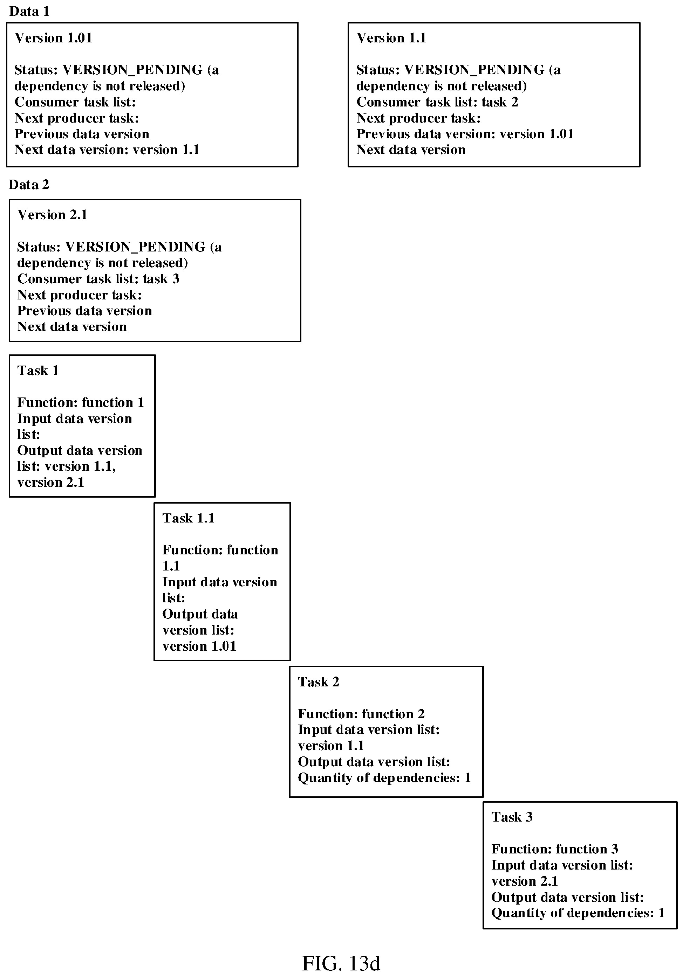

A task 3 reads the data 2. After the task 3 is submitted, a resource is first allocated to the task 3. Further refer to FIG. 13d. A data structure of the task 3 may include: a function corresponding to the task 3, for example, a function 3; and an input data version list and an output data version list corresponding to the task 3, where the lists may be empty. After it is determined that the data 2 is input data of the task 3, a data version linked list of the data 2 is read. If it is determined that the data version linked list of the data 2 is not empty, a data version, namely, the version 2.1, at a tail of the data version linked list of the data 2 is read. When it is determined that the status of the version 2.1 is VERSION_PENDING (a dependency is not released), a quantity of data dependencies of the task 3 is increased by one, the task 3 is added to a consumer task list of the version 2.1, and the version 2.1 is added to an input data version list of the task 3.

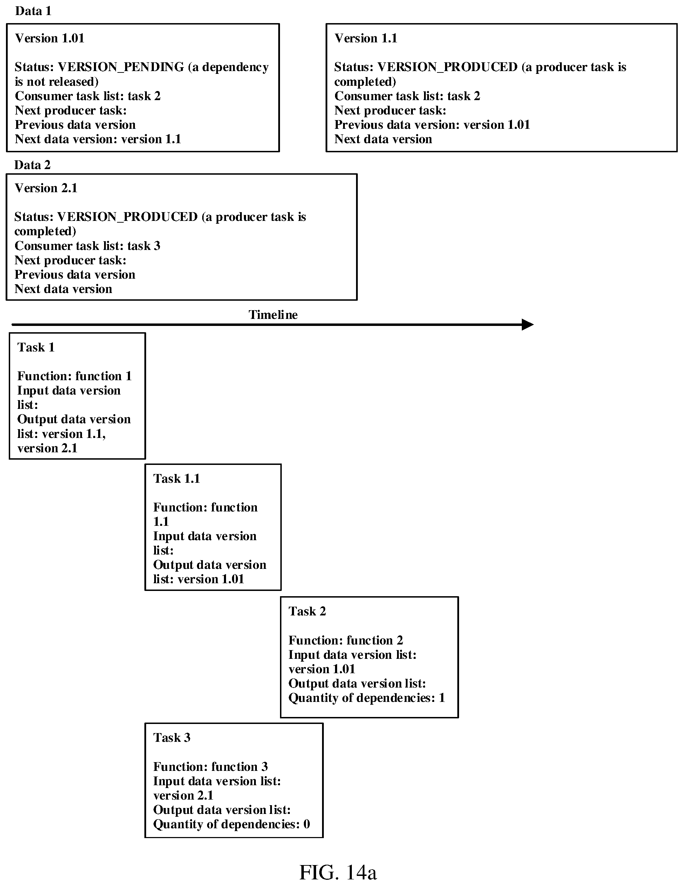

With reference to FIG. 12A and FIG. 12B and FIG. 14a to FIG. 14d, the following first describes a detailed process in which the operating system releases a data dependency between tasks based on input data and output data that correspond to the tasks in the task completion processing procedure.

For example, after a task 1 is completed, as shown in FIG. 14a, a data version linked list of data 1 is read, and the data version linked list includes a version 1.01 and a version 1.1. An output data version list corresponding to the task 1 is read, to obtain the version 1.1 and a version 2.1. The version 1.1 has a previous data version, namely, the version 1.01, and a status of the version 1.01 is VERSION_PENDING (a dependency is not released) and a status of the version 1.1 is VERSION_PRODUCED (a producer task is completed). In this case, the version 1.01 is obtained. The version 1.1 has a consumer task, namely, a task 2. The task 2 is added to a consumer task list of the version 1.01, and the version 1.1 that is in an input data version list of the task 2 is replaced with the version 1.01. The version 2.1 has no previous data version, and the version 2.1 has a consumer task, namely, a task 3. A status of the version 2.1 is updated to VERSION_PRODUCED (a producer task is completed). A quantity of data dependencies of the consumer task, namely, the task 3, corresponding to the version 2.1 is decreased by one.

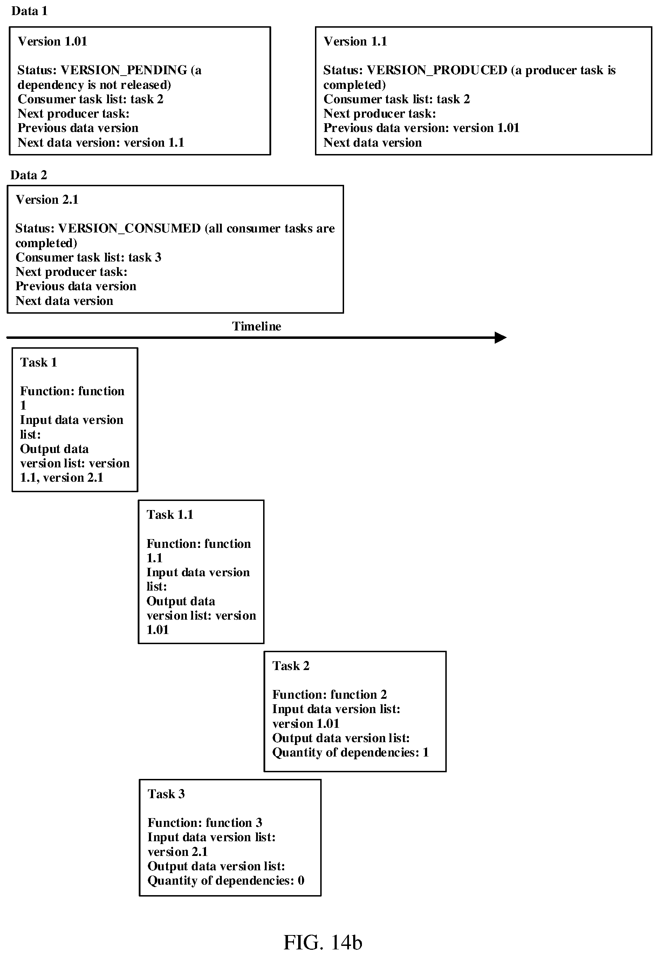

The task 3 reads data 2. After the task 3 is completed, further refer to FIG. 14b. An input data version list corresponding to the task 3 is read to obtain the version 2.1. If a last consumer task of the version 2.1 is the task 3, the status of the version 2.1 is updated to VERSION_CONSUMED (all consumer tasks are completed).

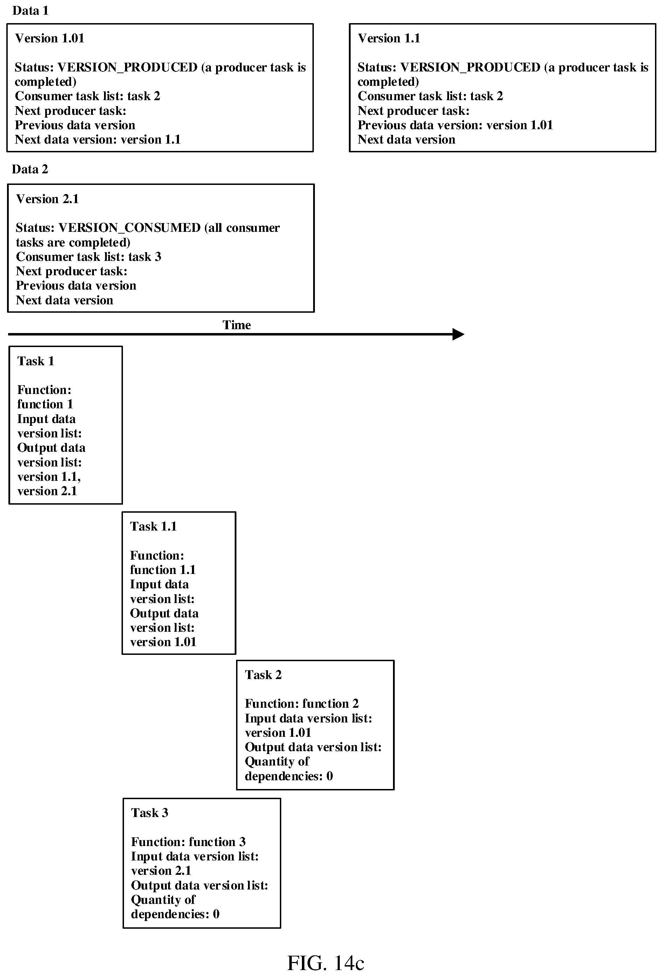

A task 1.1 writes the data 1. After the task 1.1 is completed, as shown in FIG. 14c, an output data version list corresponding to the task 1.1 is read to obtain the version 1.01. The version 1.01 has a consumer task, namely, the task 2. A status of the version 1.01 is updated to VERSION_PRODUCED (a producer task is completed). A quantity of data dependencies of the consumer task, namely, the task 2, corresponding to the version 1.01 is decreased by one. In other words, a "producer-consumer" dependency between the task 1.1 and the task 2 corresponding to the version 1.01 is released.

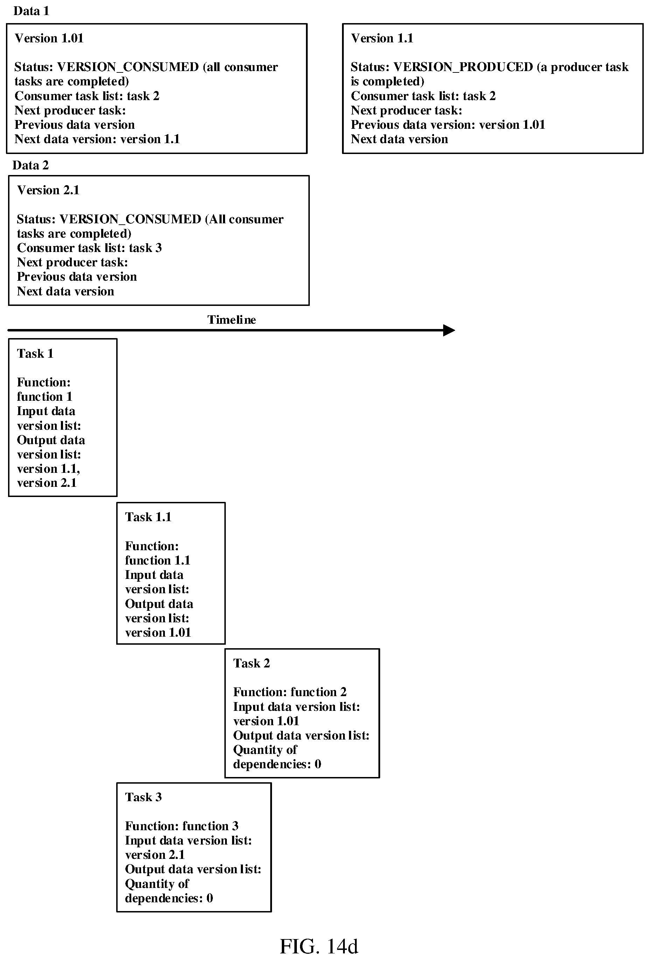

The task 2 reads the data 1. After the task 2 is completed, further refer to FIG. 14d. The input data version list corresponding to the task 2 is read to obtain the version 1.01. If a last consumer task of the version 1.01 is the task 2, the status of the version 1.01 is updated to VERSION_CONSUMED (all consumer tasks are completed).

It can be learned that, in the task scheduling method provided in this embodiment of this application, for the nested task scenario, when a data dependency is established for output data, if a child task and a parent task use same output data in a nested manner, in a sequence in a data version linked list of the output data, a data version created by the child task is inserted before a data version of the parent task. When the data dependency on the output data is released, if the child task is not completed when the parent task is completed, a related dependency of the data version of the parent task is converted to the data version of the child task. This ensures that the parent task can be exited earlier than the child task and the data dependency maintains correct.

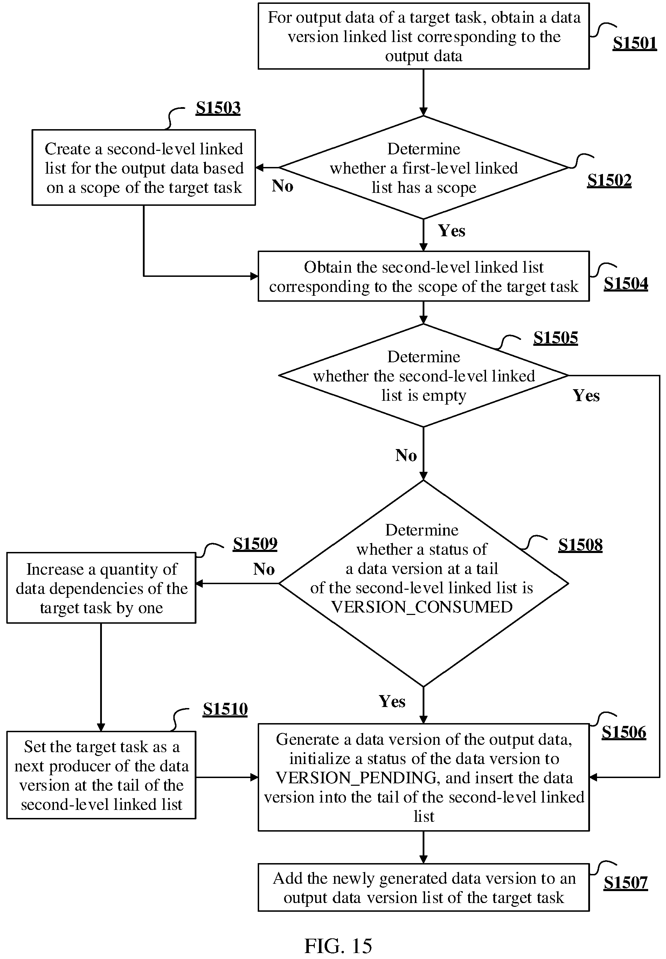

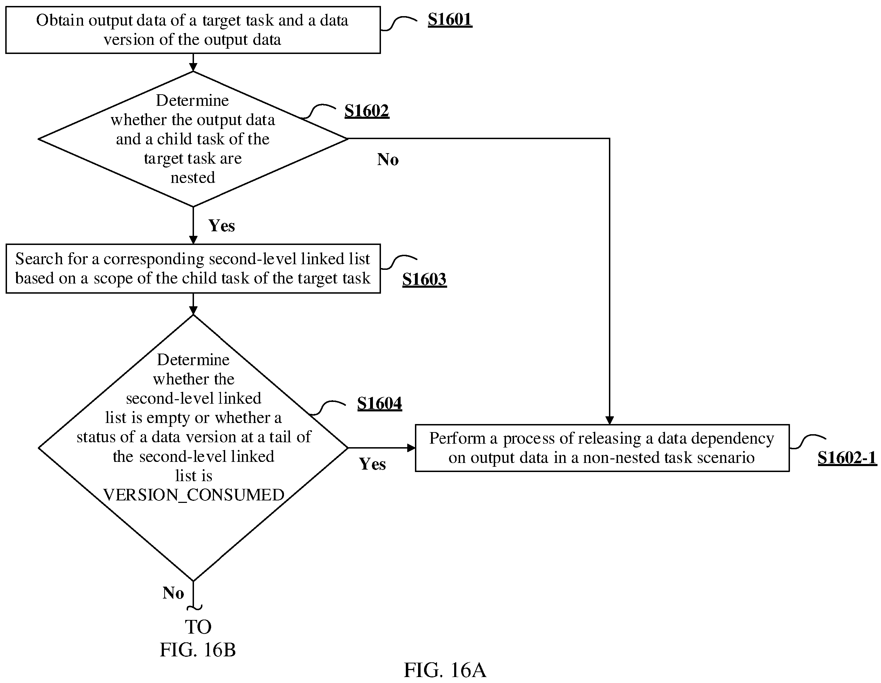

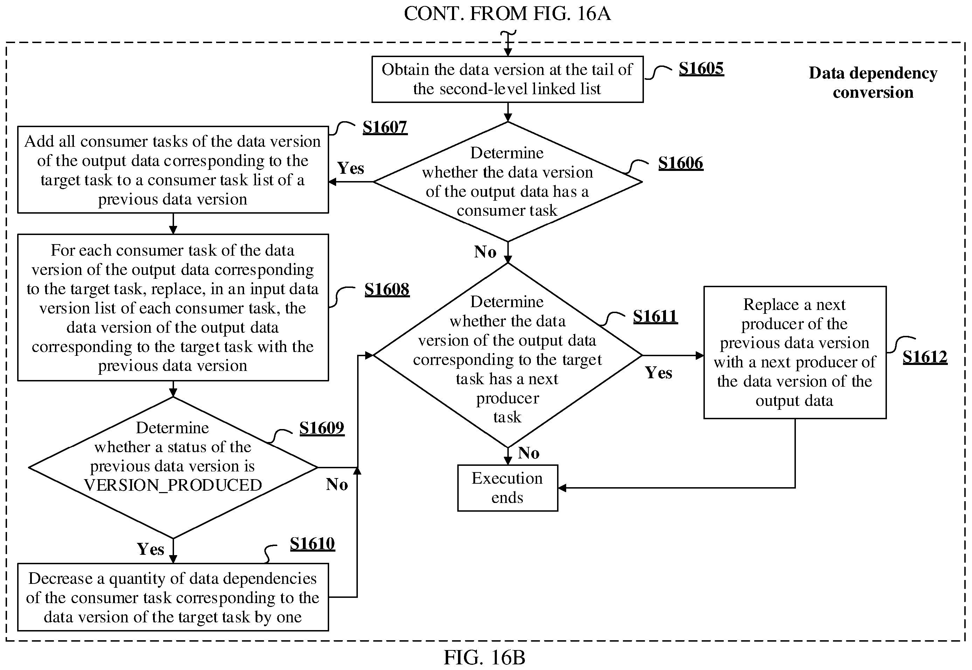

FIG. 11A and FIG. 11B and FIG. 12A and FIG. 12B describe in detail the processes of establishing the data dependency between the tasks in the task submission processing procedure and releasing the data dependency between the tasks in the task completion processing procedure in the nested task scenario. It can be learned that FIG. 11A and FIG. 11B and FIG. 12A and FIG. 12B are one solution for processing the data dependency in the nested task scenario. The following describes, by using FIG. 15 and FIG. 16A and FIG. 16B, another solution for processing the data dependency in the nested task scenario.

In some embodiments, a scope is added to a data version of output data. All data versions generated during execution of a target task are all data versions generated when the target task writes the output data, and a range of the scope of the data version is the target task.

In some embodiments, a data version linked list corresponding to the output data may use a two-level storage structure. A first-level linked list is stored based on scope information, and a second-level linked list is stored based on a data version sequence. Each data version belongs to only one scope. For example, the scope information can be directly represented by a task address of a parent task.

As shown in FIG. 15, in the nested task scenario, in the task submission processing procedure, a process of establishing a data dependency for output data based on a task scope may include the following steps.

S1501: For output data of a target task, obtain a data version linked list corresponding to the output data.

For example, if the target task (with a scope scope_j) writes data, the data written by the target task is used as output data (data_i), to establish a data dependency. The data version linked list herein may include a first-level linked list and a second-level linked list. The first-level linked list is used to store scope information, and the second-level linked list is used to store a data version.

S1502: Determine whether the first-level linked list has a scope.

For example, if there is no scope in the first-level linked list, it indicates that no other task has written or read the output data in the scope, and the scope in the first-level linked list has not been created.

In this case, step S1503 is performed, to add the scope (scope_j) of the target task to the first-level linked list of the output data, and add the second-level linked list for the scope (scope_j), to store the data version of the output data. Otherwise, step S1504 is performed, to directly obtain the second-level linked list corresponding to the scope (scope_j) of the target task.

S1503: Create a second-level linked list for the output data based on the scope of the target task.

For example, the second-level linked list herein is used to store the data version of the output data.

S1504: Obtain the second-level linked list corresponding to the scope of the target task.

For example, second-level linked lists in different scopes do not affect each other when a quantity dependency is established. In the nested task scenario, a data version of a parent task and a data version of a child task may belong to different scopes.

S1505: Determine whether the second-level linked list is empty.

For example, if the second-level linked list is empty, step S1506 is performed, indicating that only the target task writes the output data (data_i). If the second-level linked list is not empty, step S1508 is performed, indicating that in addition to the target task, there is another task that writes the output data (data_i). It is determined whether a status of a data version at a tail of the second-level linked list is VERSION_CONSUMED (all consumer tasks are completed).

S1506: Generate a data version of the output data, initialize a status of the data version to VERSION_PENDING, and insert the data version into the tail of the second-level linked list.

For example, when the target task is the first to write the output data, a latest data version of the output data is generated, and a status of the latest data version is set to VERSION_PENDING (a dependency is not released).

S1507: Add the newly generated data version to an output data version list of the target task.

For example, a data version in the output data version list herein may indicate a data version corresponding to the data written by the target task. After the target task is completed, a status of the data version may be updated to a VERSION_PRODUCED state.

S1508: Determine whether the status of the data version at the tail of the second-level linked list is VERSION_CONSUMED.

For example, if the status of the current data version of the output data is VERSION_CONSUMED (all consumer tasks are completed), it indicates that the target task or another task completes reading of the output data, and step S1506 is performed. The target task is a producer of the output data, and may generate a data version of the output data. Otherwise, step S1509 is performed, to increase a quantity of data dependencies corresponding to the target task by one, indicating that there is another task that writes the output data, and there is a data dependency between the target task and the another task.

S1509: Increase the quantity of data dependencies of the target task by one.

For example, if the quantity of data dependencies corresponding to the target task is increased by one, it indicates that there is another task that writes or reads the input data, and there is a data dependency between the target task and the another task.

S1510: Set the target task as a next producer of the data version at the tail of the second-level linked list.

For example, the target task may be a task used as a producer, and indicates a producer of the next data version instead of a producer of the current data version. Then, step S1506 is performed, to generate a latest data version of the output data, and the target task is set as a producer of the latest data version of the output data, namely, the producer of the next data version of the output data.

As shown in FIG. 16A and FIG. 16B, in the nested task scenario, in the task completion processing procedure, a process of releasing a data dependency on output data based on a scope may include the following steps.

S1601: Obtain output data of a target task and a data version of the output data.

For example, if the target task writes data, the data written by the target task is used as output data (data_i), and a data version (version_i) of the output data is obtained based on the target task, to establish a data dependency. It may be understood that the target task herein may be a parent task.

S1602: Determine whether the output data and a child task of the target task are nested.

For example, if a first-level linked list in a data version linked list of the output data (data_i) of the target task includes two or more scopes, it is determined that the output data and the child task of the target task are nested. In other words, the target task and the parent task are in a nested task scenario. In this case, step S1603 is performed. Otherwise, the process of releasing the data dependency on the output data in the non-nested task scenario may be performed. In other words, otherwise, step S1602-1 is performed, that is, the process of releasing the data dependency on the output data shown in FIG. 9c is performed.

S1603: Search for a corresponding second-level linked list based on a scope of the child task of the target task.

For example, the second-level linked list herein is used to store a data version of output data corresponding to the child task.

S1604: Determine whether the second-level linked list is empty or whether a status of a data version at a tail of the second-level linked list is VERSION_CONSUMED.

For example, the data version at the tail of the second-level linked list is a latest data version (version_k) corresponding to the scope of the child task. When the parent task is completed but the child task is not completed, a status of the data version (version_k) is not VERSION_CONSUMED, the second-level linked list is not empty, and the status of the data version at the tail of the second-level linked list is not VERSION_CONSUMED, step S1605 is performed, and data dependency conversion needs to be performed between the target task (the parent task) and the child task. Otherwise, S1602-1 is performed, that is, the process of releasing the data dependency on the output data shown in FIG. 9c is performed.

S1605: Obtain the data version at the tail of the second-level linked list.

For example, the data version (version_k) at the tail of the second-level linked list is obtained.

S1606: Determine whether the data version of the output data has a consumer task.

For example, if the data version (version_i) of the output data of the target task has a consumer task, step S1607 is performed, to add the consumer of the target task to a consumer task list of the child task. Otherwise, step S1611 is performed, to determine whether the data version of the output data has a next producer task.

S1607: Add all consumer tasks of the data version of the output data corresponding to the target task to a consumer task list of the previous data version.

For example, the consumer of the target task (the parent task) is added to the consumer task list of the data version of the output data corresponding to the child task.

S 1608: For each consumer task of the data version of the output data corresponding to the target task, replace, in an input data version list of each consumer task, the data version of the output data corresponding to the target task with the previous data version.

For example, the consumer task of the target task (the parent task) needs to be converted to the child task herein. In all input data version lists of the target task (the parent task), the data version (version_i) of the output data corresponding to the target task further needs to be replaced with the previous data version (version_k).

S1609: Determine whether a status of the previous data version is VERSION_PRODUCED.

For example, if the status of the previous data version (version_k), namely, a data version of the child task, is VERSION_PRODUCED (a producer task is completed), it indicates that a status of the child task is TASK_DONE (the task is completed). In other words, the child task is completed. In this case, step S1610 is performed, to release a data dependency of a subsequent task of the child task.

S1610: Decrease a quantity of data dependencies of the consumer task corresponding to the data version of the target task by one.

For example, because the child task of the target task (the parent task) also completes writing of the output data, even if there are a plurality of subsequent tasks that need to read the output data after the target task, accuracy of the subsequent tasks is not affected.

S1611: Determine whether the data version of the output data corresponding to the target task has a next producer task.

For example, determining whether the data version (version_i) of the output data corresponding to the target task has a next producer task is used to determine whether there is a producer task that writes output data corresponding to a next data version of the data version (version_i). If there is a next producer task, step S1612 is performed, to replace a next producer of the previous data version (version_k) with a next producer of the data version (version_i) of the output data. In other words, a next producer of the completed target task (the parent task) is converted to the child task that is of the target task and that has not been completed. Otherwise, the execution ends.

S1612: Replace the next producer of the previous data version with the next producer of the data version of the output data.

For example, the next producer of the completed target task (the parent task) is converted to the child task that is of the target task and that has not been completed. Then, the execution ends.

It can be learned that, in the task scheduling method provided in this embodiment of this application, in the nested task scenario, the data version linked list of the output data is divided into two levels. The first-level linked list is stored based on a task scope, and the second-level linked list is stored based on a sequence of data versions corresponding to scopes. When the data dependency is established for the output data, if the child task and the parent task use same output data in a nested manner, data versions corresponding to the child task and the parent task belong to different scopes in the first-level linked list. Therefore, the child task and the parent task do not interfere with each other in a process of establishing the data dependency. When the data dependency on the output data is released, the second-level linked list of the child task may be found based on the scope of the child task. If the child task is not completed when the parent task is completed, a related dependency of the data version of the parent task is converted to the data version of the child task. This ensures that the parent task can be exited earlier than the child task and the data dependency maintains correct.

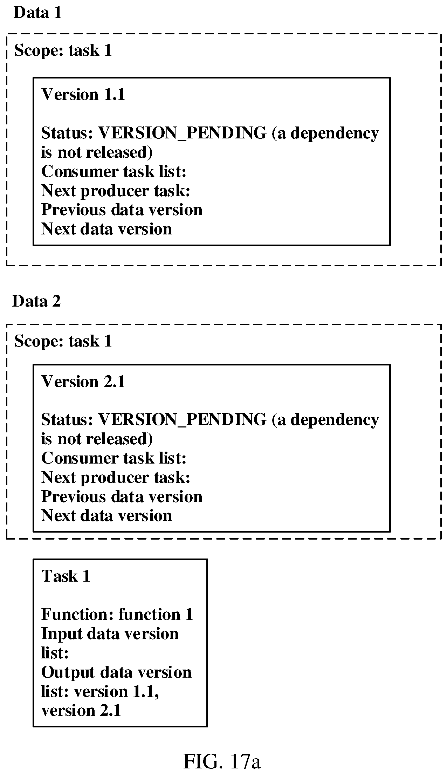

With reference to FIG. 15 and FIG. 17a to FIG. 17d, the following describes in detail a detailed process in which the operating system establishes a data dependency between tasks based on input data and input data that correspond to the tasks in the task submission processing procedure in the nested task scenario.

For example, a task 1 writes data 1 and data 2. After the task 1 is submitted, output data corresponding to the task 1 may be the data 1 and the data 2. As shown in FIG. 17a, a data structure of the task 1 may include a function corresponding to the task 1, for example, a function 1. A scope corresponding to the task 1 may be directly identified by using the task 1. Scopes for the data 1 and the data 2, namely, a first-level linked list corresponding to the task 1, are separately created. A version 1.1 and a version 2.1 of the data 1 and the data 2 are generated. Statuses of the version 1.1 and the version 2.1 are VERSION_PENDING (a dependency is not released), and the version 1.1 and the version 2.1 are respectively inserted into the scopes of the data 1 and the data 2, at tails of second-level linked lists corresponding to the first-level linked list of the task 1. The version 1.1 and the version 2.1 are added to an output data version list of the task 1.

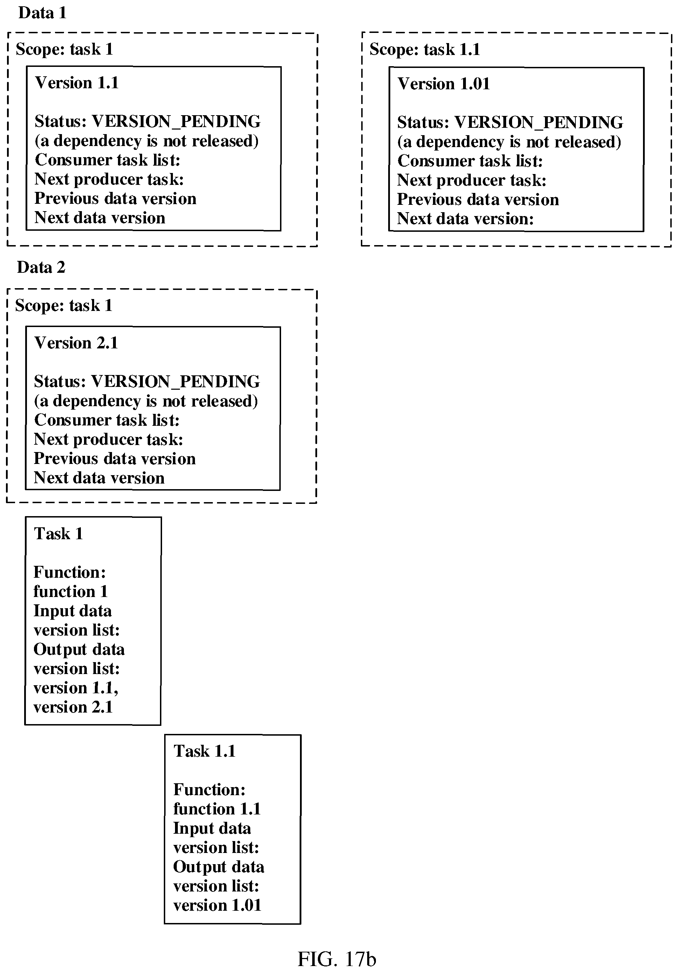

The task 1 submits a task 1.1 in an execution process, and the task 1.1 writes the data 1. Output data corresponding to the task 1.1 may be the data 1. As shown in FIG. 17b, a function corresponding to the task 1.1 is, for example, a function 1.1. A scope corresponding to the task 1.1 may be directly identified by using the task 1.1. A scope for the data 1, namely, a first-level linked list corresponding to task 1.1, is created. A version 1.01 of the data 1 is generated, and a status of the version 1.01 is VERSION_PENDING (a dependency is not released), and the version 1.01 is inserted into the scope of the data 1, at a tail of a second-level linked list corresponding to the first-level linked list of the task 1.1. The version 1.01 is added to an output data version list of the task 1.1.

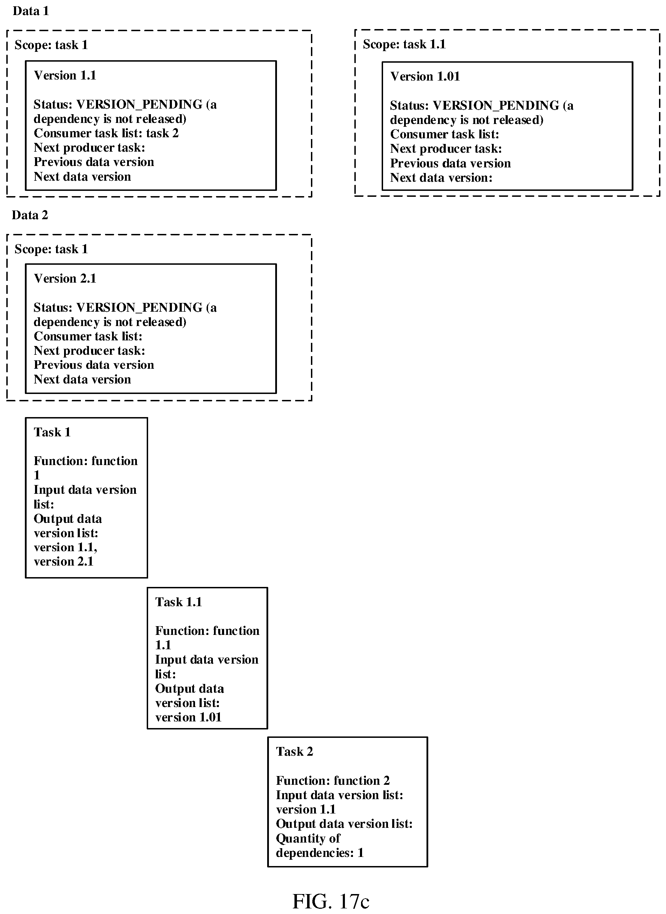

A task 2 reads the data 1. After the task 2 is submitted, as shown in FIG. 17c, a data structure of the task 2 may include a function corresponding to the task 2, for example, a function 2. After it is determined that the data 1 is input data of the task 2, a data version linked list of the data 1 is read. If it is determined that the data version linked list of the data 1 is not empty, a data version, namely, the version 1.1, at a tail of the data version linked list of the data 1 is read. When it is determined that the status of the version 1.1 is VERSION_PENDING (a dependency is not released), a quantity of data dependencies of the task 2 is increased by one, the task 2 is added to a consumer task list of the version 1.1, and the version 1.1 is added to an input data version list of the task 2.

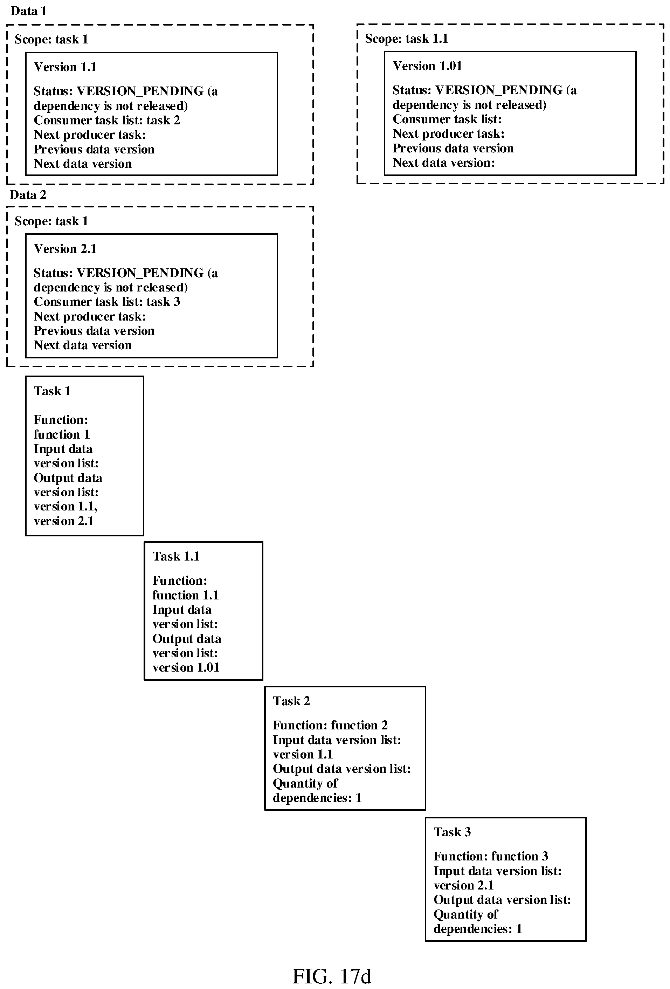

A task 3 reads the data 2. After the task 3 is submitted, a resource is first allocated to the task 3. Further refer to FIG. 17d. A data structure of the task 3 may include: a function corresponding to the task 3, for example, a function 3; and an input data version list and an output data version list corresponding to the task 3, where the lists may be empty. After it is determined that the data 2 is input data of the task 3, a data version linked list of the data 2 is read. If it is determined that the data version linked list of the data 2 is not empty, a data version, namely, the version 2.1, at a tail of the data version linked list of the data 2 is read. When it is determined that the status of the version 2.1 is VERSION_PENDING (a dependency is not released), a quantity of data dependencies of the task 3 is increased by one, the task 3 is added to a consumer task list of the version 2.1, and the version 2.1 is added to an input data version list of the task 3.

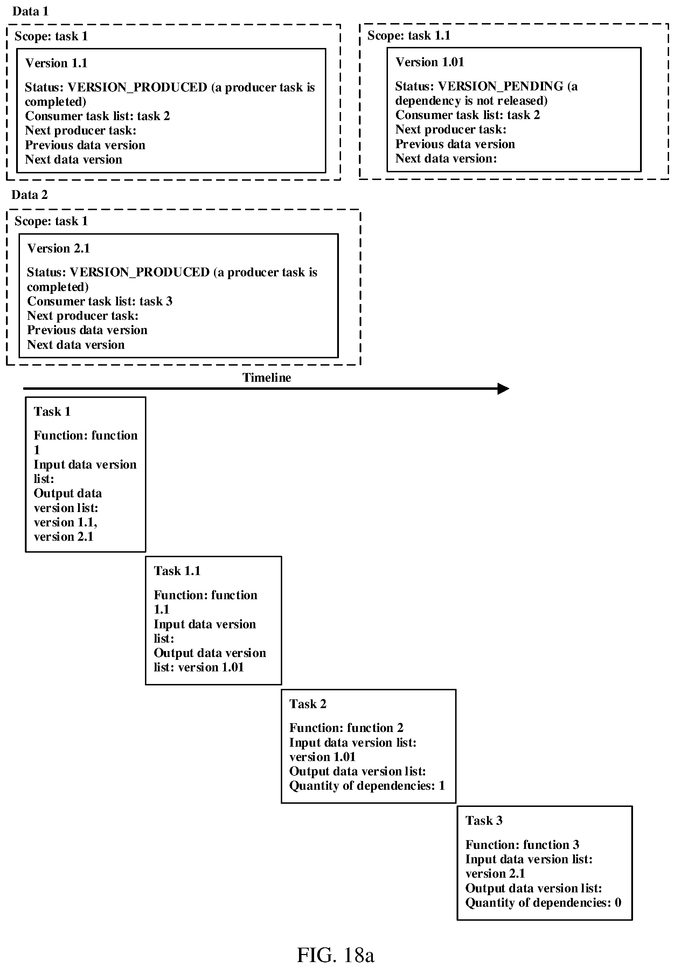

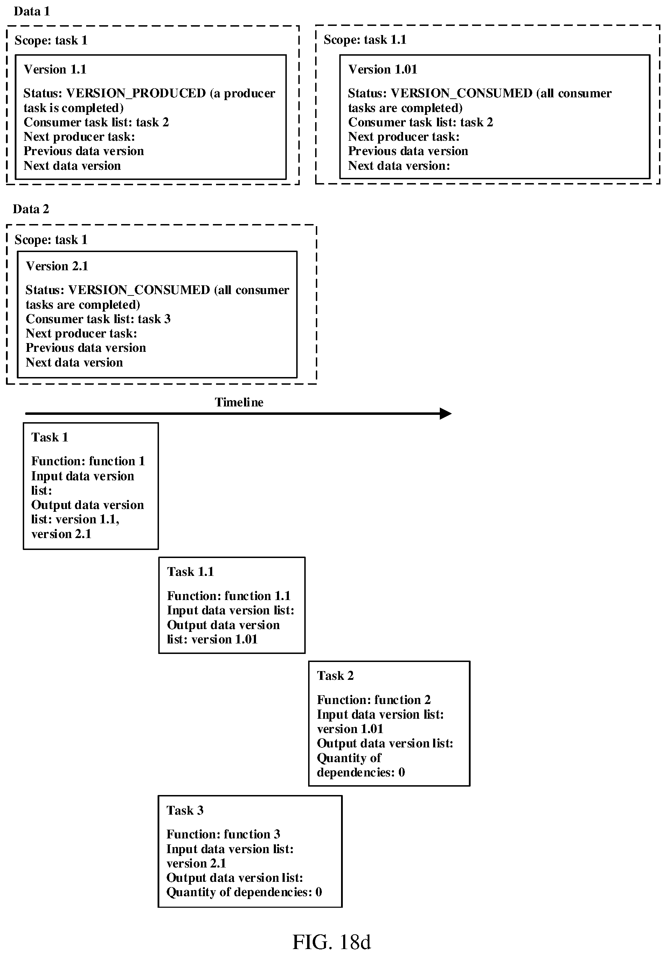

With reference to FIG. 16A and FIG. 16B and FIG. 18a to FIG. 18d, the following first describes a detailed process in which the operating system releases a data dependency between tasks based on input data and output data that correspond to the tasks in the task completion processing procedure.

For example, after a task 1 is completed, as shown in FIG. 18a, output data corresponding to the task 1 is read: data 1 and data 2, and an output data version list corresponding to the task 1 is read to obtain a version 1.1 and a version 2.1. For the data 1, a first-level linked list in a data version linked list of the data 1 includes two scopes: the task 1 and a task 1.1. The data 1 and a child task of the task 1, namely, the task 1.1, are nested. It is determined, based on the scope of the task 1.1, that a status of a data version at a tail of a second-level linked list corresponding to the task 1.1 is VERSION_PENDING (a dependency is not released), and the obtained data version at the tail is the version 1.01. The version 1.1 has a consumer task, namely, a task 2. The task 2 is added to a consumer task list of the version 1.01, and the version 1.1 that is in an input data version list of the task 2 is replaced with the version 1.01.

For the data 2, still refer to FIG. 18a. A first-level linked list in a data version linked list of the data 2 includes one scope of the task 1, a data version of the data 2 is the version 2.1, and the version 2.1 has a consumer task, namely, a task 3. A status of the version 2.1 is updated to VERSION_PRODUCED (a producer task is completed), and a quantity of data dependencies of the task 3 is decreased by one.

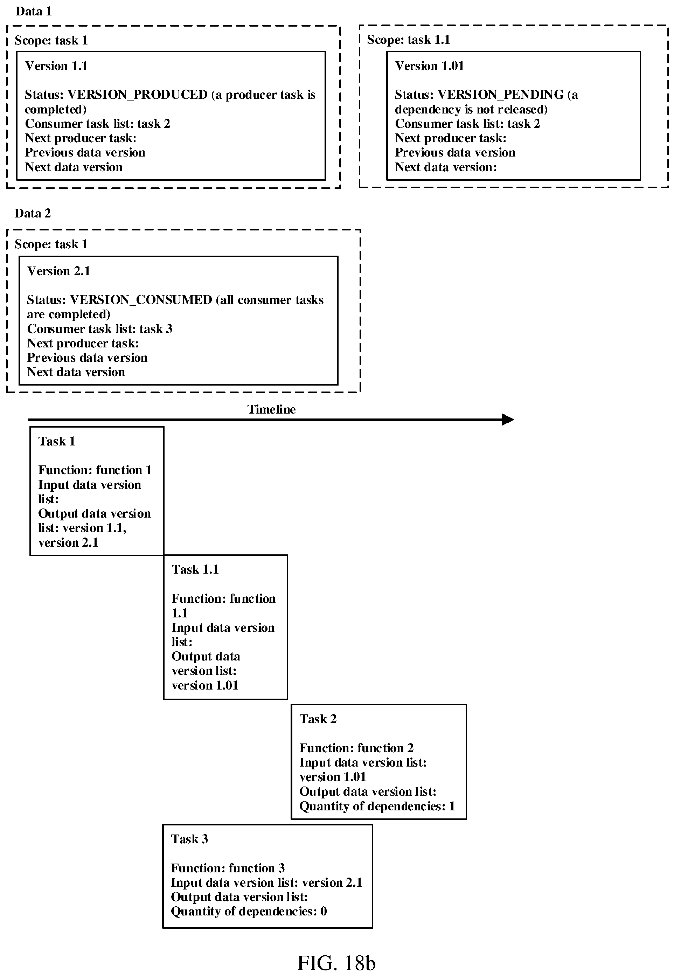

The task 3 reads the data 2. After the task 3 is completed, further refer to FIG. 18b. The input data version list corresponding to the task 3 is read to obtain the version 2.1. If a last consumer task of the version 2.1 is the task 3, the status of the version 2.1 is updated to VERSION_CONSUMED (all consumer tasks are completed).

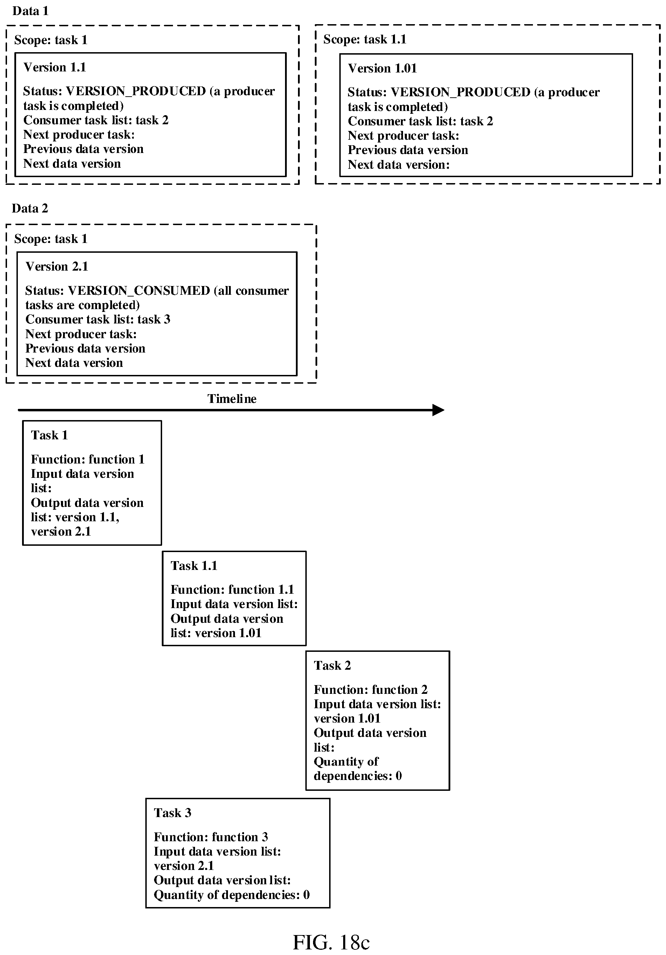

The task 1.1 and the task 1 write the data 1. After the task 1.1 is completed, as shown in FIG. 18c, an output data version list corresponding to the task 1.1 is read to obtain the version 1.01. The version 1.01 has a consumer task, namely, the task 2. A status of the version 1.01 is updated to VERSION_PRODUCED (a producer task is completed). A quantity of data dependencies of the consumer task, namely, the task 2, corresponding to the version 1.01 is decreased by one. In other words, a "producer-consumer" dependency between the task 1.1 and the task 2 corresponding to the version 1.01 is released.

The task 2 reads the data 1. After the task 2 is completed, further refer to FIG. 14d. The input data version list corresponding to the task 2 is read to obtain the version 1.01. If a last consumer task of the version 1.01 is the task 2, the status of the version 1.01 is updated to VERSION_CONSUMED (all consumer tasks are completed).

The task scheduling method provided in embodiments of this application may be applied to an electronic device installed with an operating system. The following describes an electronic device 100 related to implementation of the method provided in embodiments of this application. The electronic device 100 may be a terminal device installed with an operating system, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

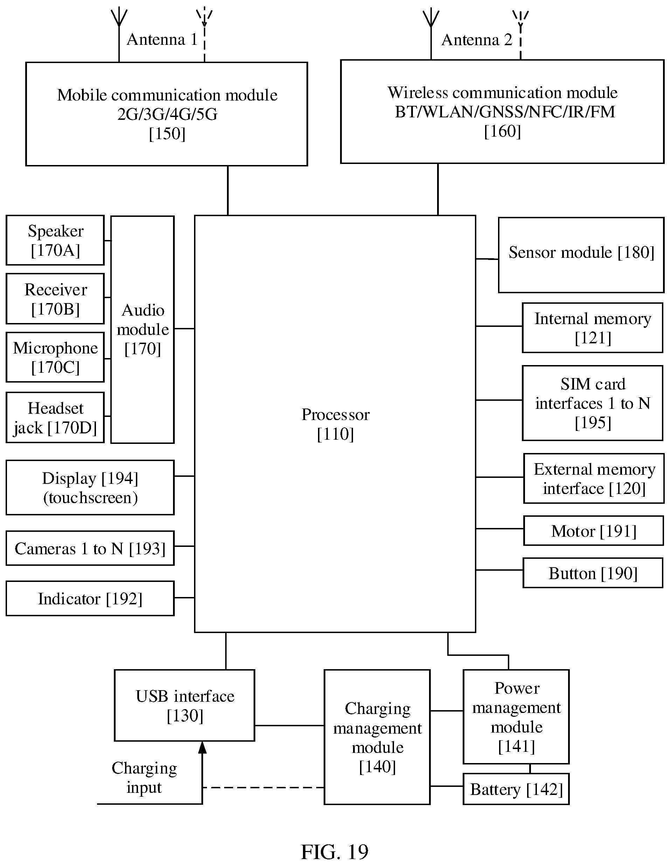

FIG. 19 is a diagram of a structure of the electronic device 100 according to an embodiment of this application. As shown in FIG. 19, the electronic device (the terminal device) may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 13, a display 194, a subscriber identification module (subscriber identification module, SIM) card interface 195, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and the like.

It may be understood that the structure shown in this embodiment does not constitute a specific limitation on the electronic device. In some other embodiments, the electronic device may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors. In some embodiments, the processor 110 may be configured to perform the task scheduling method provided in embodiments of this application.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on the structure of the electronic device. In some other embodiments, the electronic device may alternatively use an interface connection manner different from that in the foregoing embodiment, or use a combination of a plurality of interface connection manners.

The electronic device implements a display function through the GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel.

The electronic device may implement a photographing function through the ISP, the camera 193, the video codec, the GPU, the display 194, the application processor, and the like. The ISP is configured to process data fed back by the camera 193. The camera 193 is configured to capture a static image or a video. In some embodiments, the electronic device may include one or N cameras 193, where N is a positive integer greater than 1.

The external memory interface 120 may be configured to connect to an external memory card, such as a micro SD card, to extend a storage capability of the electronic device. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications and data processing of the electronic device. For example, in this embodiment of this application, the processor 110 may execute the instructions stored in the internal memory 121. The internal memory 121 may include a program storage area and a data storage area.

The program storage area may store an operating system, an application required by at least one function (for example, a sound playing function or an image playing function), and the like. The data storage area may store data (for example, audio data or an address book) and the like created when the electronic device is used. In addition, the internal memory 121 may include a high-speed random access memory, or may include a non-volatile memory, for example, at least one magnetic disk storage device, a flash memory, or a universal flash storage (universal flash storage, UFS).

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

In description of the embodiments of this application, "/" means "or" unless otherwise specified. For example, A/B may represent A or B. In this specification, "and/or" describes only an association for describing associated objects and represents that three relationships may exist. For example, A and/or B may represent the following three cases: Only A exists, both A and B exist, and only B exists.

The following terms "first" and "second" are merely used for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

An "embodiment" mentioned in this application means that a particular feature, structure, or feature described with reference to an embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in this application may be combined with another embodiment.

It should be understood that although terms such as "first" and "second" may be used in this specification to describe various features, these features should not be limited by these terms. These terms are merely used for distinction, and shall not be understood as an indication or implication of relative importance. For example, without departing from the scope of the example embodiments, a first feature may be referred to as a second feature, and similarly the second feature may be referred to as the first feature.

Furthermore, various operations will be described as a plurality of separate operations in a manner that is most conducive to understanding illustrative embodiments. However, a described order should not be construed as implying that these operations need to depend on the described sequence. A plurality of these operations may be performed in parallel, concurrently, or simultaneously. In addition, the order of the operations may be further rearranged. The processing may be terminated when the described operations are completed, but may also have additional operations not included in the figures. The processing may correspond to a method, a function, a procedure, a subroutine, a subprogram, or the like.

References to "an embodiment", "embodiments", "an illustrative embodiment", and the like in the specification indicate that the described embodiment may include a specific feature, structure, or property, but each embodiment may or may not necessarily include the specific feature, structure, or property. In addition, these phrases are not necessarily intended for a same embodiment. In addition, when specific features are described with reference to specific embodiments, knowledge of a person skilled in the art can affect combination of these features with other embodiments, regardless of whether these embodiments are explicitly described.

Unless otherwise stated, terms "contain", "have", and "include" are synonymous. The phrase "A/B" indicates "A or B". The phrase "A and/or B" indicates "(A), (B), or (A and B)".

As used in this specification, the term "module" may refer to being a part thereof, or include a (shared, dedicated, or group) memory for running one or more software or firmware programs, an application-specific integrated circuit (ASIC), an electronic circuit and/or a (shared, dedicated, or group) processor, a combined logic circuit, and/or another proper component that provides the function.

In the accompanying drawings, some structure or method features may be shown in a specific arrangement and/or order. However, it should be understood that such a specific arrangement and/or order is not required. In some embodiments, these features may be described in a manner and/or order different from that shown in the descriptive accompanying drawings. In addition, structure or method features included in a specific accompanying drawing do not mean that all embodiments need to include such features. In some embodiments, these features may not be included, or these features may be combined with other features.

Embodiments of this application are described above in detail with reference to the accompanying drawings. However, use of the technical solutions of this application is not limited to various applications mentioned in embodiments of this patent, and various structures and variations may be easily implemented with reference to the technical solutions of this application, to achieve various beneficial effects mentioned in this specification. Without departing from the purpose of this application, any variation made within the scope of knowledge possessed by a person of ordinary skill in the art shall fall within the scope of this application.

## Claims

1. A task scheduling method, applied to a processor of an electronic device, wherein the method comprises:
executing a first task, wherein the first task comprises performing a write operation on first data, and the first data comprises first subdata and second subdata;
generating a second task during execution of the first task, wherein the second task comprises performing a write operation on the first subdata;
determining that a third task comprises performing a read operation on the first subdata and that an execution association has been established between the third task and the first task;
converting the execution association between the third task and the first task into an execution association between the third task and the second task during execution of the second task after the first task is completed; and
executing a fourth task after the first task is completed, wherein the fourth task performing a read operation on the second subdata.

2. The method according to claim 1, further comprising:
executing the third task after the second task is completed.

3. The method according to claim 1, wherein determining that the third task comprises performing the read operation on the first subdata and that the execution association has been established between the third task and the first task comprises:
obtaining a first task list corresponding to the first subdata, and determining, based on the first task list, that the execution association has been established between the third task and the first task.

4. The method according to claim 3, wherein converting the execution association between the third task and the first task into the execution association between the third task and the second task comprises:
modifying, in the first task list, a read relationship of reading the first subdata by the third task through the first task to reading the first subdata by the third task through the second task.

5. The method according to claim 4, wherein the first task list is in a form of a linked list.

6. The method according to claim 5, wherein the first task list comprises a plurality of versions of subdata corresponding to the first subdata; and
in the first task list, the read relationship of reading the first subdata by the third task through the first task comprises: a read relationship between the third task and a first version of subdata in the plurality of versions of subdata of the first subdata, and a write relationship between the first task and the first version of subdata.

7. The method according to claim 6, wherein modifying the read relationship of reading the first subdata by the third task through the first task to reading the first subdata by the third task through the second task comprises:
modifying, in the first task list, the read relationship between the third task and the first version of subdata to a read relationship between the third task and a second version of subdata, wherein there is a write relationship between the second task and the second version of subdata.

8. The method according to claim 7, wherein obtaining the first task list corresponding to the first subdata, and determining, based on the first task list, that the execution association has been established between the third task and the first task comprises:
the first version of subdata is located at a tail of the first task list;
the first task comprises a first write data list, the first write data list comprises the first version of subdata, the first version of subdata comprises a first data status, and the first data status indicates that the first task has not completed the write operation on the first subdata;
the third task comprises a third read data list, and the third read data list comprises the first version of subdata; and
the first version of subdata comprises a first read task list, and the first read task list comprises the third task.

9. The method according to claim 8, wherein that there is a write relationship between the second task and the second version of subdata comprises:
when the first task and the second task are in a nested task relationship, the second version of subdata is before the first version of subdata in the first task list; and
the second task comprises a second write data list, the second write data list comprises the second version of subdata, and the second version of subdata comprises the first data status.

10. The method according to claim 9, wherein modifying, in the first task list, the read relationship between the third task and the first version of subdata to the read relationship between the third task and the second version of subdata comprises:
the second version of subdata comprises a second read task list, and the second read task list comprises the third task;
the third read data list of the third task comprises the second version of subdata; and
the first version of subdata comprises a second data status, and the second data status indicates that the first task completes the write operation on the first subdata.

11. The method according to claim 10, wherein executing the third task after the second task is completed comprises:
the second version of subdata comprises the second data status.

12. The method according to claim 1, further comprising:
obtaining a second task list corresponding to the second subdata, and determining, based on the second task list, that an execution association has been established between the fourth task and the first task.

13. The method according to claim 12, wherein the second task list is in a form of a linked list;
the second task list comprises a plurality of versions of subdata corresponding to the second subdata; and
in the second task list, the corresponding execution association between the fourth task and the first task comprises the following relationships:
a read relationship between the fourth task and a third version of subdata in the plurality of versions of subdata of the second subdata, and a write relationship between the first task and the third version of subdata.

14. The method according to claim 13, further comprising:
after the first task is completed, terminating the write relationship between the first task and the third version of subdata in the second task list.

15. The method according to claim 14, wherein in the second task list, a read relationship of reading the second subdata by the fourth task through the first task comprises:
the third version of subdata is located at a tail of the second task list;
the first task comprises a first write data list, the first write data list comprises the third version of subdata, and the third version of subdata comprises a first data status;
the fourth task comprises a fourth read data list, and the fourth read data list comprises the third version of subdata; and
the third version of subdata comprises a third read task list, and the third read task list comprises the fourth task.

16. The method according to claim 15, further comprising:
the third version of subdata comprises a second data status.

17. A computer storage medium, wherein the computer storage medium stores computer instructions, and the computer instructions are used to implement the task scheduling method according to any one of claims 1 to 16.

18. An electronic device, comprising:
a memory, configured to store instructions to be executed by one or more processors of the electronic device; and
a processor, which is one of the processors of the electronic device, and configured to perform the task scheduling method according to any one of claims 1 to 16.

19. A computer program product, comprising a non-volatile computer-readable storage medium, wherein the non-volatile computer-readable storage medium comprises computer program code used to perform the task scheduling method according to any one of claims 1 to 16.
